# EUROPEAN PATENT SPECIFICATION

(11) **EP 2 941 663 B1**
(45) Date of publication and mention of the grant of the patent: **14.10.2020**
(21) Application number: 14724635.9
(22) Date of filing: 25.04.2014
(51) Int. Cl.: G02B 21/36

(54) **A METHOD FOR AUTOMATED PLATFORM AND/OR REFERENCE OBJECT INDEPENDENT ACQUISITION OF POSITIONAL INFORMATION AND LOCALIZATION OF OBJECTS OF INTEREST IN A MICROSCOPE**
VERFAHREN FÜR EINE AUTOMATISCHE PLATTFORM- UND/ODER REFERENZOBJEKTUNABHÄNGIGE ERFASSUNG VON POSITIONSINFORMATIONEN UND LOKALISIERUNG VON INTERESSIERENDEN OBJEKTEN IN EINEM MIKROSKOP
PROCÉDÉ POUR PLATE-FORME AUTOMATISÉE ET/OU ACQUISITION INDÉPENDANTE D'OBJET DE RÉFÉRENCE D'INFORMATIONS DE POSITION ET LOCALISATION D'OBJETS D'INTÉRÊT DANS UN MICROSCOPE

(30) Priority: 26.04.2013 EP 13002262
(43) Date of publication of application: 11.11.2015
(73) Proprietor: Baden-Württemberg Stiftung gGmbH, 70174 Stuttgart (DE)
(72) Inventor: ERFLE, Holger, 69239 Neckarsteinbach (DE); GUNKEL, Manuel, 69115 Heidelberg (DE); REYMANN, Jürgen, 69115 Heidelberg (DE)
(74) Representative: Müller-Boré & Partner Patentanwälte PartG mbB
(86) International application number: PCT/EP2014/001111
(87) International publication number: WO 2014/173547

(56) References cited:
- EP-A1- 2 439 576
- WO-A1-2006/134444
- WO-A1-2012/080363
- WO-A1-2012/099574

## Description

The present invention relates to microscopic methods and respective apparatuses and/or systems for automated platform and/or reference object independent multidimensional localization of objects of interest as well as microscopic methods and respective apparatuses for automated platform and/or reference object independent acquisition of (multidimensional) positional data of objects of interest.

Quantitative analysis of biological, chemical or mechanical systems is becoming a major issue in contemporary biological, chemical and material research. Optical microscopy and in particular fluorescence microscopy plays an increasing role due to the possibility not only to visualize, but also quantify virtually every cellular, chemical or other microstructure or process of interest. Optical microscopy based imaging techniques, however, feature a strong trade-off between throughput and information content.

In particular, conventional wide-field fluorescence microscopes enable the scanning of a relatively large field of view of, for example, about 500 x 500 µm² in a fraction of a second. However, the optical resolution of these microscopes is relatively low, thus limiting the information content of the obtained microscopic images. Numerous follow-up experimentations are, therefore, necessary to gain further information on the selected objects (hits) within the observed specimen.

Confocal microscopes provide higher resolution and the ability to obtain three-dimensional structural information. However, confocal microscopes typically need several and more seconds for scanning the same field of view as conventional wide-field microscopes due to the point-wise scanning and the finer sampling at higher resolution.

In addition, various super-resolution microscopy techniques that bypass the diffraction limit and enable analyzing specimens at a spatial resolution reaching a near-molecular level have been developed. Below some examples of super-resolution microscopic techniques will be given, however the list is non-limiting.

Fluorescence Energy Transfer (FRET) microscopy allows distance measurements between two molecule types down to the few nanometer level, using visible light for excitation. Fluorescence Correlation Spectroscopy or Fluorescence Recovery After Photobleaching (FRAP) enables the analysis of intracellular mobilities of labeled molecules.

In the Confocal Laser Scanning Fluorescence 4Pi-microscopy the object is scanned by laser light focused from all sided ("4Pi geometry"). Using two opposing high numerical aperture lenses to concentrate two opposing laser beams constructively in a joint focus, the fluorescence is detected "point-by-point". Confocal Laser Scanning Fluorescence 4Pi-microscopy allows an axial optical resolution down to the 100 nm range.

Structured illumination microscopy or spatially modulated illumination microscopy (SIM / SMI) methods rely on coding high resolution information into the low resolution supported region of the microscope to circumvent the Abbe/Rayleigh limit. The required conditions are generated in SIM / SMI by illuminating the object with a periodic pattern and observing fluorescent light emitted by the illuminated sample.

Stimulated Emission Depletion (STED) microscopy is a focused beam method, in which the size of the excited region is greatly reduced by stimulated emission depletion. This technique allows an optical lateral resolution in the 15 - 20 nm range using visible light. STED Microscopy can be regarded as a special case of RESOLFT (Reversible Saturable Optical Fluorescence Transition Microscopy), where in principal, optical resolution in the few nm range is possible using visible light. RESOLFT-methods exploit non-linear effects and theoretically offer arbitrary high resolution down to molecular scale.

Localisation microscopy (LM) methods exploit photoswitching characreristics of various fluorescent markers. By generating optically isolated single molecule signals at different time points (due to conditions specific to the various different LM techniques like photoinduced activation, reversible photobleaching, usage of special 'switching buffers' etc.), the position of the single molecules can be reconstructed with few nm precision. In each subsequent image, only a subset of the total number of fluorescent markers is switched to the 'on' state to maintain the optical isolation of the single molecule signals. Thus usually thousands of images have to be acquired subsequently to reconstruct a single super resolution image. Single-molecule based methods such as for example STORM, dSTORM, PALM, fPALM. SPDMphymod, etc. can provide molecular-level colocalization information and are compatible with live cell imaging. However, acquiring a super-resolution microscopy image may need from several seconds to up to several hours for scanning the same field of view as conventional wide-field microscopes.

Due to the above technological limitations, microscopic observations are generally constrained to imaging techniques targeting either high throughput, but low resolution or high resolution, but low-throughput. It is however, of great interest to provide for microscopic techniques that offer both high resolution and high throughput.

An aspect of the invention concerns a combination of high throughput light microscopic techniques (such as conventional wide-field fluorescent microscopy techniques) with high resolution microscopic techniques (such as confocal fluorescent microscopy, super-resolution fluorescent microscopy or transmission electron microscopy techniques). This type of multi-scale imaging is a new form of correlative microscopy, in which objects interest within the observed probe are first identified by a high throughput, low resolution optical microscopic technique. The identified objects are then re-localized and further imaged by a high and/or super-resolution resolution microscopic technique. The microscope with the higher resolution may be a completely different microscope or may use the same microscope as the one used for the lower-resolution imaging but with an altered optical configuration, for example to achieve higher magnification.

A central problem in such multi-scale imaging microscopic systems is the re-localization procedure of the objects of interest (hits) identified by the lower resolution microscopic technique. In particular, there may be a shift and/or a rotation of the observed probe with respect to a probe positioning device or system of the microscope (ex. a movable object stage), so that an exact positioning, for example with µm accuracy, may be difficult if not impossible to achieve. The shift and/or rotation are generally specific for every placement of the observed probe on the positioning device or system and for every microscope and are difficult to compensate with the required high accuracy even after a careful adjustment and calibration of the microscope. In addition there may be differences in the magnification among different microscopic systems. Accordingly, known correlative microscopic techniques are as a rule very application and system specific and have to be carried out manually or semi-manually.

WO 2012/099574 A1 discloses a method for mapping coordinates of various imaging stations. In some implementations, cells (e.g. red blood cells) in a biological specimen can be used for determining the mapping information between the imaging stations. The use of cells allows a target image (e.g. an image of a sub-region of cells in the biological specimen) taken by one imaging station to be pattern matched to a reference image (e.g. an image showing a larger region of cells in the biological specimen that also includes the sub-region) taken by another imaging station. Once the target image is matched to the reference image, point by point correspondence (and therefore coordinates) between the target image and the reference image can be established for computing the coordinate transformation to map the imaging stations.

WO 2012/080363 describes a method and an apparatus for magnified imaging of samples present on a sample carrier. The sample carrier is connected to the apparatus by means of a sample carrier holder. The position of the depicted sample carrier regions in relation to the apparatus and the magnification stage used are recorded. At least one selected feature contained in the image information from the sections depicted in magnified form is used to define local coordinate systems, which are specific to the respective section, for the at least two sections depicted in magnified form.

In an aspect, an object of the invention is to provide microscopic methods and respective apparatuses and/or systems for automated platform and/or reference object independent acquisition of positional data of objects of interest and/or localization of objects of interest. According to an aspect, there is provided a method for obtaining positional data of at least one object of interest within a probe by using a microscope, for example an optical microscope. The term "probe" as used in the present application refers to the specific sample/specimen to be observed or to the sample/specimen holder (such as microscopic slide, coverslip, cellarray, multiwell pattern and/or microwell array) holding the sample/specimen to be observed. The method is defined in appended claim 1.

The method may further comprise storing said positional data of the identified objects of interest in the reference coordinate system. The positional data of the one or more objects of interest in the reference coordinate system may comprise data concerning the position of the identified objects of interest in the at least one image (i.e. in a coordinate system associated with the microscope) and data concerning a coordinate transform from the coordinate system associated with the microscope in the reference coordinate system. Based on this data the positions (coordinates) of the one or more objects of interest in the reference coordinate system may be uniquely determined. Alternatively, the data concerning the positions of the indentified objects of interest in the reference coordinate system may directly comprise the positions (coordinates) of the identified objects of interest in the reference coordinate system. According, the step of determining the positional information of the one or more objects of interest in the reference coordinate system may comprise determining the positions of said one or more objects of interest in the at least one image and transferring the obtained positions of the one or more objects of interest to the reference system (i.e. transforming of the coordinates of the positions of the identified objects of interest from the coordinate system associated with the microscope to the reference coordinate system). According to the above aspect of the invention, a reference coordinate system is established based on reference markings associates with the observed probe itself, rather than with the specific microscope used. The reference coordinate system serves as an accurate reference matrix for automatically obtaining and/or transferring of positional information (such as the coordinates) of objects of interest (hits) from one microscope to another one. The obtained positional information in the reference coordinate system is thus platform- independent and independent of the specific probe placement and may be used in various different microscopes to re-locate objects or regions of interest. This considerably facilitates the integration of various microscopic methods for obtaining information of specific objects of interest at different resolution levels. It thus becomes possible to efficiently and reliably combine different microscopic techniques, for example microscopic techniques targeting high throughput, but low resolution with microscopic techniques offering high resolution, but low-throughput. Since any reference markings allowing unique optical identification may be used, the method is principally reference object-independent.

The above method for obtaining positional data may in principle be applied to any microscopes, in particular any optical microscopes and is particularly suitable for fluorescent microscopes, for example conventional wide-field fluorescent microscopes, SIM wide-field microscopes, confocal microscopes, super-resolution microscopes, etc.. The positional data obtained is transferred and optionally stored in a reference coordinate system associated with the probe itself, rather than with the specific microscope used to carry out the microscopic observation.

According to another aspect, there is provided a method for locating at least one object of interest within a probe in a microscope (for example an optical or an electron microscope). The method is defined in appended claim 2.

The positional information of the at least one object of interest may be positional information obtained by the above method for obtaining positional data of at least one object of interest according to an aspect of the invention. This data may be then transferred in the coordinate system of the microscope, i.e. in a coordinate system which is specific to a given microscope. The transferred positional data may be used to control a movable probe positioning device or system (comprising for example a piezo- and/or motor-driven object stage, object stage, micro- and nanostages, etc.) capable of moving to the specified coordinates, so as to locate the specific object of interest and subsequently carry out microscopic observations. Accordingly, the step of locating said one or more objects of interest may comprise moving the probe positioning device or system to the determined positions of objects of interest in the coordinate system of the microscope. The proposed method considerably facilitates the integration of various microscopic methods for obtaining information of specific objects of interest at different resolution levels. Since any reference markings allowing unique identification (for example unique optical identification or unique identification in an image obtained by means of electron microscopy) may be used, the method is principally reference object-independent.

The method for locating objects of interest may in principle be applied to any microscopes, including optical microscopes and electron microscopes, and is particularly suitable for fluorescent microscopes. For example the method may be applied to conventional fluorescent microscopes with narrow field of view and/or high magnification, conventional confocal fluorescent microscopes or super-resolution microscopes, such as a FRET microscope, a Confocal Laser Scanning Fluorescence 4Pi-microscope, a STED, a SPDM microscope, a SALM/LM microscope, a STORM/dSTORM microscope, a PALM/fPALM microscope, an SPDMphymod microscope, etc.. The method may also be applied to electron microscopes, in particular transmission electron microscopes (TEM).

In the above described methods according to different aspects of the invention, a plurality of images of the probe may be obtained. The plurality of images includes images of the probe obtained by moving the probe positioning device or system to the expected positions of the at least three reference markings and acquiring an image of the probe at the expected position of each of the reference markings, i.e. acquiring an image of the reference markings. The positions of each of the reference markings may be determined from the obtained images of the reference markings. More specifically, in each of the obtained images, the position of the corresponding reference marking is determined. Based on the determined positions of the reference markings, a reference coordinate system may be established. The plurality of images may further include images obtained by moving the probe positioning device or system to the determined positions of the objects of interest.

The step of determining the position of the reference markings may comprise determining the geometrical center or the center of gravity of the obtained images of the reference markings. The position of the center of gravity of the images of the reference markings may be regarded as corresponding to the exact position of each of the reference markings in a coordinate system associated with the microscope. The reference coordinate system may be established based on the determined exact positions of the reference markings. Various automatic, known image processing algorithms may be used to determine the position of the center of gravity of the obtained images of the reference markings.

The step of identifying the at least three reference markings in the at least one image obtained by the microscope comprises applying object recognition, shape fitting and/or template matching algorithms to said at least one image to identify the reference markings. Further, standard "teaching/learning" methods for identifying or selecting reference markings and determining suitable classifiers for their recognition may be employed and integrated within the procedure for relocalization/adjustment of positional data based on the identified reference markings. Since these image processing algorithms are known, a detailed explanation thereof will be omitted.

Any objects and/or structures on or within the observed probe allowing optical discrimination, discrimination by an electron microscopy or other microscopic means, in particular any objects and/or structures producing images with sufficient contrast, may serve as reference markings (reference markers). According to the invention, the reference markings are fluorescent beads and/or specific structures or objects inherent to the observed probe, such as for example typical (fluorescently marked) cells or cellular compartments. Preferably, the fluorescent markers/dyes used are markers/dyes that can be used in all imaging platforms (all microscopes involved). In an example, the fluorescent markers/dyes used are markers/dyes that are suitable for both for wide-field and super-resolution microscopic observations. In another example, reference markings (such as for example grids) may be suitable for both transmission electron microscopy and light microscopy. The reference markings may be, however, any non-fluorescent markings or objects on or within the probe, which allow optical discrimination and/or discrimination by means of electron microscopy or other microscopic techniques due to their morphological characteristics such as size, shape, arrangement and/or due to their optical characteristics, such as transmission, reflection, spectral and/or polarization characteristics. The reference markings may be a part of the sample/specimen to be observed. Alternatively or in addition, the reference markings may be structures separate from the sample/specimen to be observed and may be a part of the microscopic slide, coverslip, cellarray, multiwell pattern and/or microwell array holding the sample/specimen to be observed. The reference markings may be contained within the field of view of the microscope that includes the objects of interest and/or may be arranged outside of the field of view and be accessed or located separately from the objects of interest.

The shape, size and/or the arrangement of reference markings on or within the probe may vary. Thus for example, the reference markings may have any shape, not limited to spherical or substantially spherical shape. The diameter of the reference markings may vary, for example from 1 µm to 100 µm, preferably in the range of 10 - 20 µm in order to be visible within the whole field of view in different microscope systems and at varying magnifications. The arrangement of the reference markings may vary, as long as it enables the determination of a suitable reference coordinate system, for example an orthogonal coordinate system.

In principle, two reference markings are sufficient to establish a reference coordinate system, such as for example an orthogonal reference coordinate system in two dimensions. In this case, locating the objects of interest may comprise moving a probe positioning device along two orthogonal axes, for example along x,y axes. If a reference coordinate system in more than two dimensions is required, more than two reference markings may be needed. According to the invention, an orthogonal three-dimensional reference coordinate system is established based on at least three reference markings. The locating of objects of interest in this case may comprise moving a probe positioning device along a third axis (z-axis) in addition to the two orthogonal axes x and y and/or moving the microscope objective along the third axis. The microscope objective may be moved by a respective positioning unit comprising for example a piezo element, z-Galvo, etc. It is also possible to use the time, color or other parameters as an additional dimension and/or for discriminating the reference markings and/or objects of interests.

The positional data of the indentified objects of interest in the reference coordinate system may be stored in an XML-format, for example as an XML table. Advantages of the XML format are the portability of the positional data to any other microscopic system. No proprietary software or specific application sockets or ports are needed. Of course, other suitable, preferably non-proprietary data formats may be used.

According to another aspect there is provided a method for carrying out microscopic observations of a probe by using at least two microscopes (such as for example two optical microscopes, a combination of an optical microscope and an electron microscope, etc.) comprising:
obtaining/receiving positional data of at least one object of interest within a probe by a first microscope according to the method of for obtaining positional data of at least one object of interest of an aspect of the invention;
locating said objects of interest in a second microscope according to the method for locating at least one object of interest of an aspect of the invention; and
obtaining microscopic images of said objects of interest by using the second microscope.

Thus, highly efficient, improved microscopy method may be realized, which offers advantages of both high throughput and high resolution.

In the above method as well as throughout the application, the terms "first microscope", "second microscope", etc. may refer to distinct microscopes or to distinct configurations of the same reconfigurable microscope. In the latter case, the term "first microscope" refers to a first configuration and the term "second microscope" to a second configuration of the same microscope. For example, the reconfigurable microscope may be an optical microscope and the two configurations may be two different optical configurations, enabling for example the capturing of images with different magnifications, the capturing of images with different dimensions (e.g. two/three-dimensional images), the capturing of different types of images (e.g. widefield/confocal/localization images), etc.

The first microscope may have a lower resolution that the resolution of the second microscope. The first microscope may be for example a wide-field fluorescent microscope or a structured illumination microscope. The second microscope may be for example a confocal fluorescent microscope or a super-resolution microscope such as a FRET microscope, a Confocal Laser Scanning Fluorescence 4Pi-microscope, a STED, a SPDM microscope, a SALM/LM microscope, a STORM/dSTORM microscope, a PALM/fPALM microscope, an SPDMphymod microscope, etc.. The second microscope may be also an electron microscope, for example a transmission electron microscope (TEM). In an application, the first microscope may be a microscope with a low resolution and high throughput and it may be used as a filter or a trigger system that determines and communicates the positions of relevant objects of interests to a second microscope or microscopic system with a higher resolution. In this application the first microscope may serve as a pre-selection stage to pre-select relevant object of interest which are then examined using the second microscope or microscopic system. As described above, the first and the second microscopes may refer to different configurations of the same reconfigurable microscope or microscopic system.

In the above described methods according to an aspect of the invention, the accuracy with which the reference coordinate system may be established (i.e. the accuracy with which the positions of one or more objects of interest in the reference coordinate system may be determined) depends on the accuracy with which the reference markings may be positioned within or on the probe and/or the accuracy of the positioning device data, which in turn depends on the accuracy with which the positioning device, ex. object stage, may be moved. Usually, the accuracy of the established reference coordinate system and respectively the accuracy of the positional data of objects of interest in the reference coordinate system is in the range of several micrometers.

In some applications, it may be desirable to obtain positional data and or locate objects of interest with even higher accuracy and precision.

According to another aspect, which is particularly applicable for highly accurate, fine adjustment of positional information and/or object location, a method for obtaining positional information and/or object location is proposed, which relies on detecting specific target objects and/or regions and/or patterns within the image of the probe and using the detected target objects and/or regions and/or patterns for correcting positional data of objects of interest (hits). The target objects and/or regions and/or patterns may be detected using for example pattern/template matching or other image processing methods. This method may be combined with any of the above described methods according to aspects of the invention. In particular, there is proposed a method for carrying out microscopic observations of a probe by using at least two microscopes. The method is defined in appended claim 8 and comprises:
acquiring at least one first image of the probe by a first microscope,
identifying at least one target object and at least one object of interest within the first image and obtaining first positional data of the at least one target object and at least one object of interest on the basis of the first image;
locating the at least target object in a second microscope based on the first positional data of the at least one target object and obtaining at least one second image of the at least one target object by the second microscope;
scaling or transforming the second image to match the parameters of the first image;
determining the shift and/or rotation between the first image and the scaled or transformed second image;
correcting the first positional data of the at least one object of interest and optionally (for example in an iterative process for determining the exact position of the objects of interest) correcting the first positional data of the at least one target object, taking into account the determined shift and/or rotation between the first and the scaled second image; and
re-locating the at least one object of interest based on the corrected first positional data of the at least one object of interest and obtaining a second image of the at least one object of interest by the second microscope.

The step of locating the at least one target object in the second microscope may comprise moving a probe positioning device or system of the second microscope to the determined position of the at least one target object based on the first positional data of the at least one target object. Similarly, the step of re-locating the at least one object of interest may comprise moving the probe positioning device or system of the second microscope to determined position of the at least one object of interest based on the corrected first positional data of the at least one object of interest.

The target objects, on the basis of which the (fine) adjusting of the positional data is carried out, may be any objects, structures or regions within the probe, which may be identified in the microscopic image of the probe due to their structural and/or optical characteristics, such as for example form, shape, morphological structure, relative position with respect to each other, fluorescent spectrum, transmission, reflection and/or polarization characteristics, etc.. Target objects may be thus certain biological objects and/or structures inherent to the probe, such as for example fluorescently labelled cells or cellular compartments or subcompartments.

Alternatively or in addition, target objects may be fluorescent markers, fluorescent beads or arbitrary other objects enabling optical detection and/or detection by means of electron microscopy or other microscopic means. In an example, the target objects may be any objects generating sufficient contrast in both light and electron microscopic images.

According to the invention, the target objects are fluorescent beads and/or specific structures or objects inherent to the observed probe.

The specific positioning, arrangement and/or distribution of the fluorescent markers, beads, and/or other objects may enable their unique identification in the obtained images of the probe. The target objects may be identified in the obtained images by using routine image processing methods, such as object/pattern/template matching, correlation, etc. Further, standard "teaching/learning" methods for identifying or selecting target objects and determining suitable classifiers for their recognition in arbitrary microscopic images may be employed and integrated within the procedure for relocalization/adjustment of positional data based on the identified target objects.

The above method for correcting positional data of objects of interest locating objects of interest based on the corrected positional data using target objects enables locating objects of interest with a precision in a sub-micrometer range. Advantages of the proposed method are for example, improved integration of different microscopic methods for obtaining information of specific objects of interest at different resolution levels. In particular, different microscopic techniques, for example microscopic techniques targeting high throughput, but low resolution with microscopic techniques offering high resolution, but low-throughput may be efficiently and reliably combined. As any target object allowing optical identification and/or identification by means of electron microscopy and/or any other microscopic means may be used, the method is principally reference object-independent.

The parameters of the first image may comprise image magnification and/or image size. These parameters may be transmitted together with the first image to the second microscope. The second image may be scaled and/or transformed (for example by applying an affine, a projective, a polynomial or other suitable transformation) to match the transmitted parameters, for example to match the magnification and/or size of the first image.

The step of determining the shift and/or rotation between the first image and the scaled and/or transformed second image may comprise correlating and/or target matching of the first image and the scaled second image. Since these image processing methods are known, a detailed description thereof will be omitted.

In an example, the above method may be combined with the above described methods for obtaining positional data of objects of interest and locating the objects of interest using reference markings. For example, the step of obtaining first positional data of the at least one target object and at least one object of interest on the basis of the first image may comprise obtaining positional data of said at least one object of interest and at least one target object in a reference coordinate system according to the method for obtaining positional data of at least one object of interest of an aspect of the invention. The step of locating the at least one target object and at least one object of interest in said second microscope may comprise locating said at least one target object and/or object of interest in the second microscope according to the method for locating at least one object of interest of an aspect of the invention.

Further, according to an aspect, there are provided computer program products, which when loaded and executed on processor (or a computer or a computer system) are configured to carry out a method for obtaining positional data and/or locating an object of interest and/or obtaining and/or processing microscopic images according to aspects of the present invention as described above. The processor on which the computer program product is executed may be a part of the control unit of the microscope or may be a part of an external computer or a computer system which is connected to the control unit of the microscope.

According to an aspect of the invention as defined in appended claim 11, there is provided a computer program product, which when loaded and executed on a processor is configured to obtain positional data of at least one object of interest within a probe based on at least one image of a probe obtained by a microscope, said computer program product being configured to:
obtain/receive at least one image of the probe obtained by the microscope;
identify at least two reference markings associated with said probe in the at least one image and determine their positions in the at least one image;
determine a reference coordinate system associated with said reference markings based on the determined positions of the reference markings in the at least one image and data concerning the position of a positioning device or system (for example a piezo- and/or motor-driven object stage, micro- and nanostages, etc.) of the microscope;
identify one or more objects of interest within the at least one image;
determine positional information of the one or more objects of interest in the reference coordinate system.

The computer program product may be further configured to store said positional information of the one or more objects of interest in a storage unit (which may be a part of the microscope or may be external to the microscope).

According to another aspect, there is provided a computer program product, which when loaded and executed on a computer or a computer system is configured to obtain execute a routine for locating at least one object of interest within a probe observed by a microscope, said computer program product being configured to:
obtain/receive positional data of at least one object of interest in a reference coordinate system associated with at least two reference markings associated with the probe;
obtain/receive at least one image obtained by the microscope;
identify said at least two reference markings and determine their positions in the at least one image;
determine a coordinate transformation from the reference coordinate system to a coordinate system of the microscope based on the determined positions of said at least two reference markings in the at least one image;
transfer said positions of the one or more objects of interest from said reference coordinate system to the coordinate system of said microscope by applying said coordinate transformation;
control said microscope (for example by controlling a movable probe positioning device or system of the microscope) to locate said one or more objects of interest based on the determined positions of the one or more objects of interest in said coordinate system of the microscope.

According to still another aspect, there is provided a computer program product, which when loaded and executed on a computer or a computer system is configured to obtain and/or process microscope images of a probe obtained by at least two microscopes, said computer program product being configured to:
obtain/receive a first image obtained by a first microscope;
identify at least one target object and at least one object of interest within said first image and obtain first positional data of the at least one target object and at least one object of interest on the basis of the first image;
obtain/receive at least one second image obtained by a second microscope;
control said second microscope (for example by controlling a movable probe positioning device or system of the second microscope) to locate the at least target object based on the first positional data of the at least one target object and obtain at least one second image of the at least one target object by the second microscope;
scale the second microscopic image to match the parameters of the first image;
determine the shift and/or rotation between the first image and the scaled second image;
correct the first positional data of the at least one object of interest and optionally (for example in an iterative process for determining the exact position of the objects of interest) correct the first positional data of the at least one target object, taking into account the determined shift and/or rotation between the first and the second image; and
control the second microscope to re-locate the at least one object of interest based on the corrected first positional data of the at least one object of interest and to obtain a new second microscopic image of the at least one object of interest by the second microscope.

In the above computer program products the step of obtaining/receiving at least one image obtained by a microscope (microscopic image) may comprise reading said at least one microscopic image obtained from a storage unit. The step of controlling the microscope to locate said one or more objects of interest and/or one or more target objects comprises controlling a probe positioning device or system (e.g. movable object stage) of the microscope to move to the determined position of the corresponding object of interest and/or target object.

Still further, there are provided apparatuses (microscopes and microscope systems) configured to carry out a method for obtaining positional data and/or locating an object of interest and/or obtaining and/or processing microscopic images according to aspects of the present invention as described above. The microscopes may be optical microscopes, electron microscopes or any other suitable microscopes. The term "optical microscope" includes any microscope using light in the visible, near-infrared and/or near ultraviolet range.

In an aspect, there is provided a microscope according to appended claim 12.

The reference coordinate system may be determined based on the determined positions of the reference markings in the at least one image and data concerning the position of the probe positioning device or system (for example a piezo- and/or motor-driven object stage, micro- and nanostages, etc.).

The microscope according to the above aspect may be for example an optical microscope, such as wide-field fluorescent microscope or a structured illumination microscope.

According to another aspect, there is provided a microscope according to appended claim 13.

The microscope according to the above aspect may be an optical microscope, for example a confocal fluorescent microscope or a super-resolution microscope such as a FRET microscope, a Confocal Laser Scanning Fluorescence 4Pi-microscope, a STED, a SPDM microscope, a SALM/LM microscope, a STORM/dSTORM microscope, a PALM/fPALM microscope, an SPDMphymod microscope, etc.. Alternatively, it may be an electron microscope, for example a transmission electron microscope (TEM).

The above described data receiving unit, reference coordinate system calculating unit, positional data calculating unit, a coordinate transfer unit and movable probe positioning device or system may be integrated within a single reconfigurable microscope or microscopic system.

Accordingly, the referencing of objects of interest may be carried out by using two different microscopes or by using the same reconfigurable microscope or microscopic system, in the manner described above.

According to still another aspect as defined in appended claim 14, there is provided a system for carrying out microscopic observations of a probe by using at least two microscopes (for example two optical microscopes, a combination of an optical microscope and an electron microscope, etc.) comprising:
a first image detection unit configured to obtain at least one first image of an at least one object of interest and/or at least one target object by a first microscope:
a first positional data calculating unit configured to identify at least one target object and at least one object of interest in said at least one first image and obtain first positional data of the at least one target object and at least one object of interest on the basis of the first image;
a movable probe positioning device or system configured to move in accordance with the first positional data of the at least one target object so as to locate the at least target object in a second microscope;
a second image detection unit configured to obtain at least one second image of an at least one object of interest and/or at least one target object by a second microscope:
   an image processing unit configured to
      scale the second image of said at least one target object obtained by the second image detection unit so as to match the parameters of a first image of said at least one target object obtained by the first image detection unit;
      determine the shift and/or rotation between the first image of the at least one target object and the scaled second image of the at least one target object;
      correct the first positional data of the at least one target object and at least one object of interest taking into account the determined shift and/or rotation between the first and the scaled second image; and
   wherein said probe positioning device or system is further configured to move in accordance with the corrected first positional data of the at least one object of interest so as to locate the at least one object of interest (in the second microscope).

A new second image of the located object of interest may be obtained by the second microscope and optionally subjected to a further processing.

The first image detection unit and the first positional data calculating unit may be a part of the first microscope. The movable positioning device or system, the second image detection unit and the image processing unit may be a part of the second microscope. Alternatively, all units may be a part of a single reconfigurable microscope. Accordingly, as noted above, the term "second microscope" used throughout this application may refer to a microscope which is distinct from the first microscope or to the same microscope with a different configuration, for example a different optical configuration.

In an example, the microscope system or each microscope of the microscope system may be provided with a combination of a reference coordinate system calculating unit, a positional data calculating unit, (optionally) a storage unit for storing said positional data of said at least one object of interest (for example position data in a reference coordinate system), a positional data receiving unit, a coordinate transfer unit and a probe positioning device or system, as described above. In addition, the microscope system or each microscope constituting the microscope system may comprise an image processing unit as described above, configured to process images of target objects obtained in different optical configurations/platforms to obtain correctional data for correcting of positional data of at least one target object and/or at least one object of interest in the manner described above.

In the above microscopes or microscope systems according to any of the aspects of the invention, the illumination unit may comprise at least one light source, such as a LED, a laser, lamps, etc. The illumination unit may further comprise one or more optical elements such as objectives, lenses, beam-splitters, filters, etc. The image detection unit may comprise a CCD camera or any other image detectors. Further, the microscopes or microscope systems according to any of the aspects of the invention may comprise a storage unit for storing positional data of said at least one object of interest and/or positional data of the at least one reference marking, for example positional data in said reference coordinate system. The probe positioning device or system, which is configured to move in accordance with obtained positional information of the reference markings and/or objects of interest, may be connected to any of the positional data calculating unit, positional data receiving unit, coordinate transformation unit and storage unit and may communicated with them via suitable ports and/or interfaces. The probe positioning device or system may comprise a movable object stage, for example a piezo- and/or motor driven object stage. The probe positioning device or system may further comprise a controller implemented in a digital electronic circuitry, said controller configured to receive data from one or more of the positional data calculating unit, positional data receiving unit, coordinate transformation unit and storage unit and control for example the motor and/or the piezo-element of the piezo-and/or motor driven object stage.

The computational aspects described in the present application (including the reference coordinate system calculating unit, the positional data calculating unit, the storage unit for storing said positional data of said at least one object of interest in said reference coordinate system, the positional data receiving unit, the coordinate transfer unit and/or the image processing unit) can be implemented in digital electronic circuitry, in computer hardware, firmware, software, or in combinations of them. When appropriate, aspects of these systems and techniques can be implemented in a computer program product, for example tangibly embodied in a machine-readable storage device for execution by a programmable processor; and method steps can be performed by a programmable processor executing a program of instructions to perform functions by operating on input data and generating an output. Further, the reference coordinate system calculating unit, the position data calculating unit, the positional data receiving unit, the coordinate transfer unit, the controller of the probe positioning device or system and/or the image processing unit may be integrated with a (central) control unit/software of the respective microscope. Alternatively, one or more of these units may be realized as a separate unit or units (for example implemented in suitable software and/or hardware), which may communicate with the control unit/software of the respective microscope via suitable ports/interfaces. The positional data may be stored in an XML-format, for example as an XML-table. This enables the porting/transferring of the positional data to various different microscopic systems, which may not possess specialized ports/interfaces, since the XML-format is generally recognized and used in many modern microscopic control software/control units.

To provide for interaction with a user, a computer system can be used having a display device, such as a monitor or a LCD screen for displaying information to the user and a keyboard, a pointing device such as a mouse or a trackball, a touch-sensitive screen, or any other device by which the user may provide input to computer system. The computer system can be programmed to provide a graphical user interface through which the computer program(s) interact(s) with the user.

The above methods and apparatuses have been described in connection with a first and a second microscope. The methods and apparatuses may, of course, be applied to more than two microscopes, for example to a microscopic system comprising three microscopes or to a reconfigurable microscope operating in at least three different modes of operation. The three microscopes/modes of operation may be for example a conventional wide-field microscope, a confocal microscope (or any other optical microscope allowing for a 3D sectioning) and a super-resolution microscope.

The above described methods and apparatuses can greatly facilitate correlative light microscopy combining for example wide-field and/or confocal with super-resolution light microscopy. An extension to electronic microscopic methods is also feasible. For instance, the grinds which are used in transmission electron microscopy (TEM) can be used equally well as reference markers in light and electron microscopy and thus serve to transfer coordinates of interest between both systems. Alternatively, any object generating a good contrast in both light and electron microscopy can be used.

Such correlative microscopic methods and apparatuses have great potential for many applications, for example for high throughput chemical and RNAi screening. The gain of information by combing wide-field or confocal with super-resolution microscopy (such as super-resolution light or electron microscopy) allows to address many new applications (for example assay classes for image-based screening approaches) which are traditionally excluded due to weak responses of the specimen which are difficult to detect at the resolution of a wide-field or confocal screen. In an example, in order to increase the information content of small scale confocal screens automated correlative screening techniques may be used for filtering out non-interesting phenotypes and to "zoom" deeper into interesting events for imaging in a mode of high information context.

In addition, single-molecule based super-resolution techniques offer the additional advantage of providing molecular coordinates, which can be further processed in e.g. molecular-level colocalization analysis. This is significantly different to colocalization analysis in confocal microscopy, which is based on the intensity information in individual pixels and thus is spatially constrained. In a coordinate-based approach and applied to single-molecule localization data, a colocalization value (i.e. the number of neighboring molecule positions of the same or a different label within a certain proximity range) can be determined for every single molecule position.

These and other aspects, objects, features and advantages of the present invention will now be described with reference to the following drawings:
**Fig. 1** shows schematically an exemplary method for obtaining positional information of objects of interest in a microscope, wherein **Fig. 1A** shows schematically the determination coordinate system associated with the microscope and the reference coordinate system and **Fig. 1B** shows schematically the determination of the position of a reference marking;
**Fig. 2** shows a flow chart of an exemplary method for automatic or semi-automatic establishing of a reference coordinate system;
**Fig. 3** shows a flow chart of an exemplary method for switching between two different microscopes and relocating of objects of interest identified by a first microscope in a second microscope;
**Fig. 4** shows an example of applying a method for obtaining positional information of objects of interest in a microscope to microscopic images;
**Fig. 5** shows a flowchart of an exemplary method for fine adjustment of positional data obtained on the basis of microscopic images;
**Fig. 6** shows schematically an exemplary method for fine adjustment of positional information based on identifying target objects in a probe, wherein **Fig. 6A** shows a first image obtained by a first microscope, **Fig. 6B** shows a second image obtained by a second microscope, **Fig. 6C** shows a scaled second image, **Fig. 6D** shows the determining of the shift and/or rotation between the first and the scaled second image;
**Fig. 7** shows schematically an exemplary method for fine adjustment of positional information based on identifying a pattern of target objects in a probe, wherein **Fig. 7A** shows a first image obtained by a first microscope, **Fig. 7B** shows a second image obtained by a second microscope, **Fig. 7C** shows a scaled second image and **Fig. 7D** shows the determining of the shift and/or rotation between the first and the scaled second image.

It should be understood that even though embodiments are separately described, single features thereof may be combined to additional embodiments. Further, same reference signs are used to denote the same or similar features in the figures.

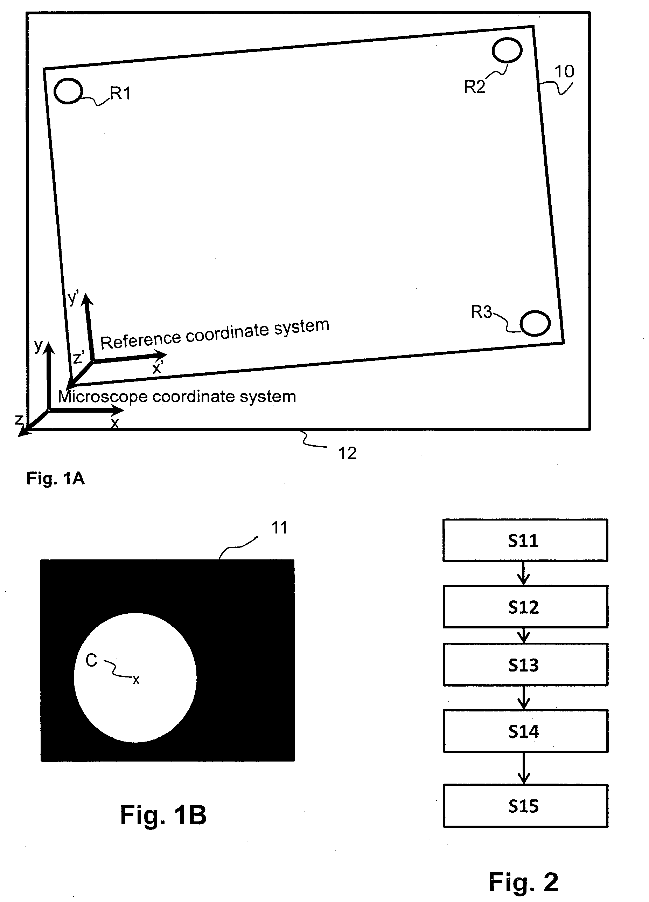

**Fig. 1** shows schematically an exemplary method for obtaining positional information of objects of interest in a microscope. As shown in **Fig. 1A** the image 10 of the probe obtained by a microscope is rotated and/or shifted with respect to the object stage 12 (the object stage constituting the probe positioning device or system or being a part of it) on which the probe to be observed is placed. Accordingly, the image 10 of the probe is rotated/shifted with respect to the reference system {*x,y,z*} associated with the object stage 12 (i.e. the reference system associated with the microscope). The rotation and/or shift are imaging platform specific and may further vary from observation to observation (i.e. from a probe placement to a probe placement). The rotation and/or shift are difficult to compensate even after a careful calibration of the microscopic system. Accordingly, the positional data (i.e. the coordinates) of objects of interest obtained on the basis of the microscopic image of the probe are imaging platform and probe-placement specific. This hinders the location of selected objects of interest in a different imaging platform, i.e. in a different microscope.

In order to obtain platform and/or probe-placement independent positional data, a conversion of the positional data in a coordinate system associated with the probe itself is utilized. The reference system may be determined based on at least two reference markings (reference points) associated with the probe. As shown in Fig. 1A, in an example three reference markings R1, R2, R3 may be used. The reference markings R1, R2 and R3 may be a part of the observed sample/specimen itself of may be provided on or within the substrate or on or within the frame of the sample/specimen holder holding the sample/specimen to be observed (for example a microscopic slide, a coverslip, a microwell array, a multiwell array, etc.). Based on the identified reference markings R1, R2 and R2, a reference coordinate system {*x',y',z'*} may be determined. The reference coordinate system {*x',y',z'*} is preferably an orthogonal reference system. The determined reference system is associated with the probe itself, rather than with the microscope with which the microscopic observations are carried out. Accordingly, the coordinates of objects of interest transferred in this reference system will be generally imaging platform independent and may be subsequently ported in many different imaging platforms or microscopes.

**Fig. 2** shows an exemplary method for automatic or semi-automatic establishing of a reference coordinate system (hereinafter also referred to as an automatic referencing method) associated with a probe by using reference markings on the probe. The method comprises the following steps

| | |
|---|---|
| Step S11: | Automatically or manually moving the object stage of the microscope (on which the probe to be observed is placed) to the expected positions of at least two reference markings (example reference markings R1, R2, R3) associated with the probe; |
| Step S12: | Acquiring an image at the expected position of each of the reference markings by said microscope. **Fig. 1B** shows schematically the image 11 of a reference marking obtained by the microscope at the expected position of the reference marking; |
| Step S13: | (Automatic) recognition of the reference marking (for example by suitable image processing routines including object detection, pattern/template matching, shape fitting, etc.) and determining the position of the reference marking in the acquired images of the respective reference marking; |

| | |
|---|---|
| Step S14: | Determining the exact position of each of the reference markings from data concerning the stage position and data concerning the position of the reference markings in the acquired images; and |
| Step S15: | Determining a reference coordinate system {*x',y',z'*} associated with the reference markings based on the determined exact positions of the reference markings. |

As noted above, the reference markings R1, R2, R3 may be any suitable markings, such as for example fluorescent markers, fluorescent beads, typical objects/structures within the observed sample, etc..

The determining of the position of the reference markings in the acquired images may involve determining the geometrical center or the center or the gravity "C" of the image of the respective reference marking, as illustrated in **Fig. 1B****.** The determined position of the geometrical center or the center of gravity "C" of a specific reference marking is taken as the position of the reference marking in the acquired images of the probe. From data concerning the position of the object stage and data concerning the position of the reference markings in the obtained images of the probe (i.e. in a coordinate system associated with the microscope), the exact position of the reference markings may be determined. Based on the determined exact positions of the reference markings a coordinate system associated with the reference markings (reference coordinate system) may be determined.

Once the reference coordinate system associated with the reference markings is established, it may be used to relocate objects of interests in different microscopic systems or in the same microscopic system, but with changed optical configuration (for example different magnification). In an example, all positional data of objects or regions of interest obtained on the basis of microscopic images by a specific microscope may be transferred to the reference coordinate system. The positional information in the reference coordinate system is thus platform- and/or reference object independent and may be used in various different microscopes to re-locate objects or regions of interest. The positional information may be stored in a storage unit, for example in an XML format. The storage unit may be a part of the microscope or may be an external unit.

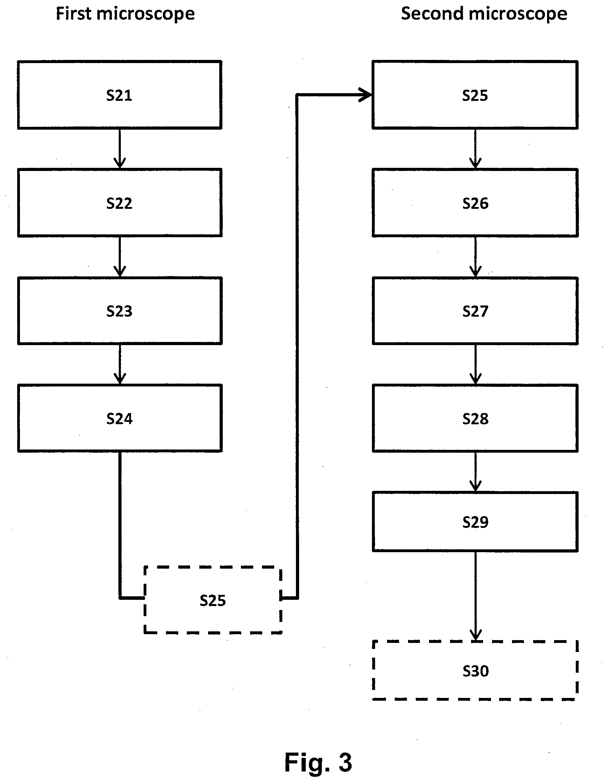

**Fig. 3** shows a flow chart of an exemplary transfer/switch between two different microscopic systems and the relocating of objects of interest identified by a first microscope in a second microscope. The method comprises:

| | |
|---|---|
| Step S21: | Determining the positions of the reference markings (ex. R1, R2, R3) at the first microscope and determining a reference coordinate system associated with the reference markings (for example by the method described in connection with Figs. 1 and 2); |
| Step S22: | Acquiring at least one image of the probe by the first microscope; |
| Step S23: | Automatically or manually identifying of regions and/or objects of interest in the acquired image and determining the positions (coordinates) *x*^{*A*1} of the identified regions and/or objects of interest in a coordinate system associated with the first microscope; |
| Step S24: | Transferring of the position of the regions and/or objects of interest in the reference coordinate system: *x*^{*A*1} → *x^{R}*; |
| Step S25: | (Optional) automatic or manual transfer of the sample in a second microscope; |
| Step S26: | Determining the positions of the reference markings at the second microscope. Based on the positions of the reference markings at the second microscope a coordinate transform from the reference coordinate system to the coordinate system of the second microscope may be determined; |
| Step S27: | Transferring the positions of the regions or objects of interest from the reference coordinate system in the coordinate system of the second microscope: *x^{R}* → *x*^{*A*2} |
| Step S28: | Automatically moving the object stage of the second microscope to the determined position of the regions or objects of interest in the coordinate system of the second microscope |
| Step S29: | Obtaining images of the identified regions and/or objects of interest by the second microscope. |

The obtained images of the identified regions and/or objects of interest may be subjected to further processing (Step 30). The further processing may comprise merging or correlating information obtained on the basis of microscopic images obtained by the first microscope with information obtained on the basis of the microscopic images obtained by the second microscope.

Similar procedure may be applied if the second microscope is not a separate microscope distinct from the first microscope, but is based on the first microscope with altered optical configuration (for example different magnification). In this case the probe does not need to be manually or automatically transferred to the second microscope.

An exemplary method for obtaining positional information of objects of interest in case one microscope with reconfigurable optical configuration may comprise the steps:
a) acquiring an image of the probe in a microscope having a first optical configuration;
b) automatic or manual identifying of regions and/or objects of interest in the acquired image and determining the position *x*^{*A*1} of the identified regions and/or objects of interest in the microscope
c) change of the optical configuration of the microscope from the first to a second optical configuration
d) automatically moving the stage to the determined position of the regions and/or objects of interest in the microscope having the second optical configuration
e) obtaining images of the identified regions and/or objects of interest in the microscope having second optical configuration

The positions of the regions and/or objects of interest may be determined in a reference coordinate system, which is established as described above.

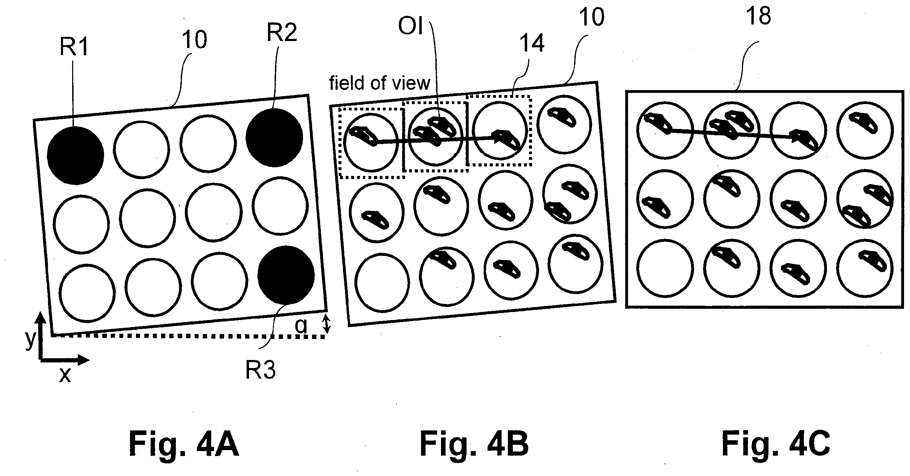

**Fig. 4** shows an example of applying the above described method for carrying out microscopic observations in two microscopes. **Fig. 4A** shows the obtained microscopic image 10 of the probe by the first microscope. Based on the positions of the reference markings R1-R3, a reference coordinate system is established. The reference coordinate system takes into account the shift and/or the rotation of the image 10 of the probe with respect to the object stage, i.e. with respect to a coordinate system of a microscope. The coordinate of the objects of interest OI within the field of view 14 of the microscope are determined depending on their relative position with respect to the reference coordinate system, as illustrated in **Fig. 4B****.** After a suitable coordinate transformation, the determined coordinates of the objects of interest may be transferred to arbitrary another microscope, as illustrated in **Fig. 4C****.**

Generally, the accuracy with which the reference coordinate system {*x',y',z'*} may be established (and therefore the accuracy with which the positions of one or more objects of interest in the reference coordinate system may be determined) depends on the accuracy with which the reference markings are positioned within or on the probe and/or the accuracy of the object stage data. If highly precise microwell cell arrays are used as a probe, the reference markings may be usually positions within the microwell array with accuracy in the single µm range. Usually, the accuracy of the established reference coordinate system and respectively the accuracy of the positional data of objects of interest in the reference coordinate system is in the range of several micrometers. Accordingly, the above described methods and procedures are particularly suitable for course determination of positional information and/or localization of objects or regions of interest and/or course positioning of the object stage of the microscope.

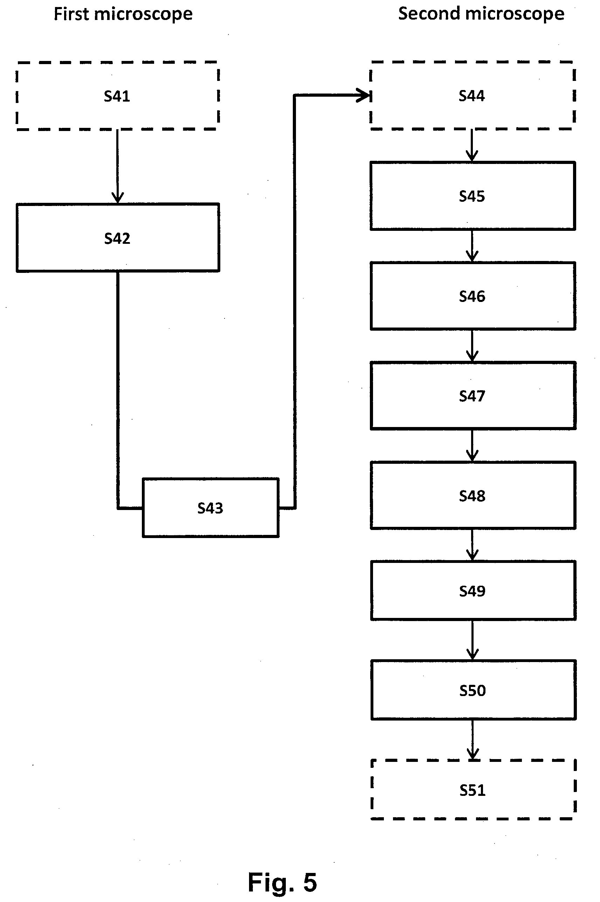

In some applications, it may be desirable to obtain positional data and or locate objects of interest with even higher accuracy and precision. For this purpose, a fine adjusting of the positional data using a method employing known structures, objects or patterns within the observed probe may be employed in addition to the above methods or alternatively. **Fig. 5** shows a flowchart of an exemplary method for fine adjustment of positional data obtained on the basis of microscopic images. The method comprises

| | |
|---|---|
| Step S41 | (Optional): automatic or manual referencing by using reference markings on the probe substrate/probe, for example by using the method described in connection with Figs. 1 and 2; |
| Step S42: | Acquiring at least one first image of the probe comprising at least one region/object of interest and at least one structure/object/pattern on the basis of which fine positioning/adjusting of positional data is to be carried out (target object). Arbitrary structures/objects which provide sufficient contrast may be used (for example fluorescent polystyrene balls (so called beads), fluorescently marked cells, organelle structures, subcellular compartments or other structures within the observed sample); |

| | |
|---|---|
| Step S43: | Change of the microscope, with optionally new automatic or manual referencing (Step S44) in the manner described above, or change of the optical configuration of the microscope; |
| Step S45: | Automatically or manually moving the object stage to the position of the at least one structure/object on the basis of which fine positioning is to be carried out (target object). The positional data of the at least one structure/object on the basis of which the fine positioning is to be carried out may be obtained on the basis of the first image. Optionally, the positional data of the at least one structure/object on the basis of which the fine positioning is to be carried out may be obtained for example by the methods described in connection with Figs. 1 to 4 above. The positional data (for example in form of a XML table, list, etc.) may be transmitted from the first microscope to the second microscope; |
| Step S46: | Acquiring at least one second image of the structure/object on the basis of which fine positioning is to be carried out (target object); |
| Step S47: | Scaling and/or transforming of the second image to the same parameters as the first image. The parameters of the first image (such as for example magnification and/or size, etc.) may be transmitted together with the first image or may be automatically determined on the basis of the first image; |
| Step S48: | Determining of the displacement between the first image and the scaled second image (for example by a correlation and/or an affine and/or a projective and/or a polynomial transformation); |
| Step S49: | Correcting the positions of identified regions/objects of interest and (optionally) the structures/objects on the basis of which fine positioning is to be carried out (target objects) by the determined displacement; |
| Step S50: | Locating the regions/objects of interest based on their corrected positions and acquiring images of the at least one region/object of interest by the second microscope or the first microscope with different configuration. |

The above steps S45 to S50 may be repeated after a particular number of image acquisitions or before every image acquisition for a more precise positioning. Further, it is possible to apply iteratively the procedure for fine correction of positional information (i.e. steps S45 to S49) several times, thereby increasing the precision of the positional data correction.

The obtained images of the identified regions and/or objects of interest may be subjected to further processing (Step 51). The further processing may comprise merging or correlating information obtained on the basis of microscopic images obtained by the first microscope with information obtained on the basis of the microscopic images obtained by the second microscope.

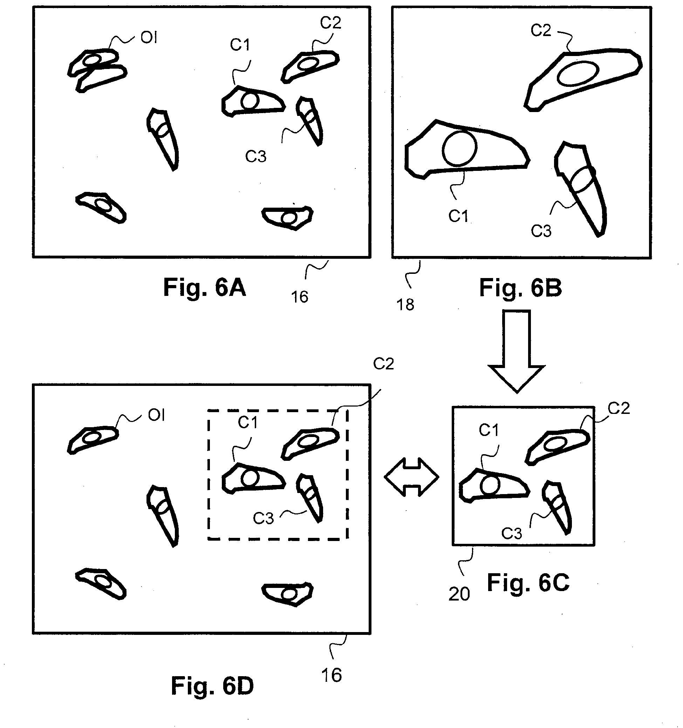

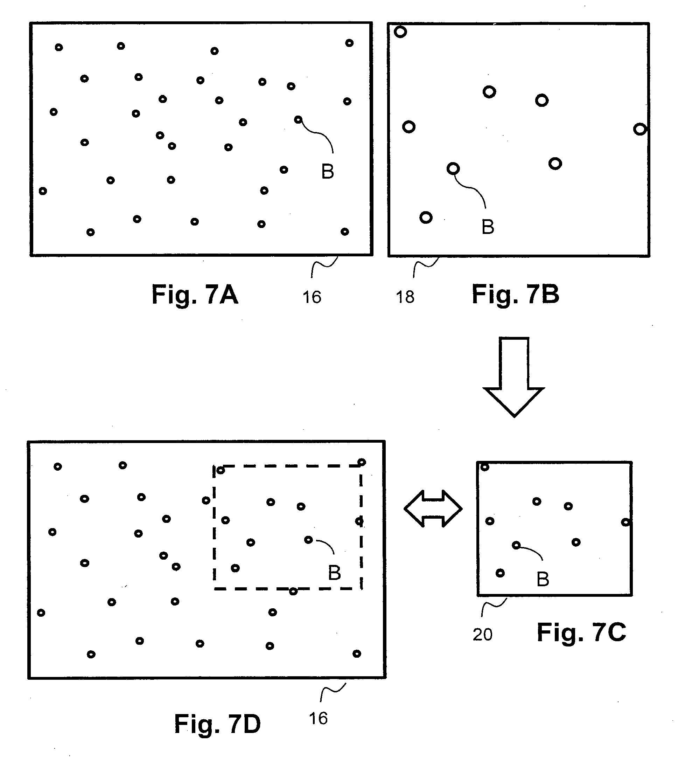

**Figs. 6** and **7** illustrate exemplary methods for fine adjustment of positional data obtained on the basis of microscopic images using probe-specific objects/structures (Fig. 6) or using patterns of fluorescent beads (Fig. 7).

The method shown in Fig. 6 uses target objects or structures inherent to the observed probe, which in this specific case is a cell or tissue culture, for carrying out fine positioning. The target objects may be specific cells that may be identified due to their size, shape and/or other morphological characteristics. Suitable target objects are for example fluorescently marked cells, cell organelle or suborganelle structures, like Cis or Trans Golgi. **Fig. 6A** shows a first image 16 obtained by a first microscope. Three cells C1-C3 form a specific pattern, on the basis of which fine positioning, i.e. fine correcting or adjustment of positional data is performed, for example by using for example the method described in connection with Fig. 5. **Fig. 6B** shows a second image 18 of the target objects (cells C1 to C3) obtained by a second microscope, for example a microscope with higher magnification and/or resolution as the first microscope. The second image 18 is scaled to produce a scaled second image 20 shown in **Fig. 6C** with parameters (for example magnification) matching the parameters of the first image 16. The scaled second image 20 is then compared to the first image 16 to determine the shift and/or rotation between the two images, as illustrated in **Fig. 6D****.** For example, the scaled second image and the first image 16 may be correlated and based on the result of the correlation, the shift and/or rotation between the two images may be determined. Alternatively, the shift and/or the rotation between the two images may be determined by an affine transformation, a projective transformation, a polynomial transformation, pattern matching or any other suitable methods.

In the method illustrated in **Fig. 7** fluorescent bead patterns formed by the fluorescent beads, with which the sample and/or the sample holder, the sample holder substrate, is marked are used instead of probe-specific cells and/or cell arrangements. The method is otherwise similar to the method shown in Fig. 6. In particular, **Fig. 7A** shows a first image 16 obtained by a first microscope. A plurality of fluorescent beads "B" form a specific pattern, on the basis of which fine positioning is performed, for example by using for example the method described in connection with Fig. 5. **Fig. 7B** shows a second image 18 of the fluorescent bead pattern obtained by a second microscope, for example a microscope with higher magnification and/or resolution as the first microscope. The second image 18 is then scaled to match the parameters of the first image 16, thereby forming a scaled second image 20 shown in **Fig. 7C****.** The scaled second image 20 is then compared to the first image 16 to determine the shift and/or rotation between the two images, as illustrated in **Fig. 7D****.** For example, the scaled second image 20 and the first image 16 may be correlated and based on the result of the correlation, the shift and/or rotation between the two images may be determined. Alternatively, the shift and/or the rotation between the two images may be determined by an affine transformation, a projective transformation, a polynomial transformation, pattern matching, and other suitable methods.

As noted above the method for fine positioning or respective fine adjustment of the positional data of objects of interest obtained on the basis of microscopic images may be combined with the method for determining of positional data of objects of interest in a reference coordinate system and/or locating the objects of interest using said reference coordinate system. Thus for example, positional data of target objects and/or objects of interest obtained on the basis of microscopic images by the first microscope may be transferred in a reference coordinate system and transmitted to the second microscope. In the second microscope, the positional data may be transferred from the reference coordinate system to the coordinate system of the second microscope and use to locate said target objects and/or objects of interest. The positions of the target objects and/or objects of interest may be subsequently fine adjusted, by using for example any of the methods shown in Figs. 4 to 6.

In the above exemplary methods, the probe may be a sample/specimen placed in a conventional microscopic slide. If reference markings are provided, they may be provided on the slide substrate or in other parts of the slide, such as for example its borders/periphery. Alternatively, the reference markings may be embedded in the probe itself. In an example microwell cell arrays with physically separated cavities on a glass slide using a titanium coating may be used as probe. The microwell cell arrays may be provided with two or three sets of reference markers at the borders of the glass slide (in the glass slide frame) that allow precise location of the array coordinates during different processing steps including automated data acquisition. An advantage of the microwell cell arrays is their unique capacity for parallel assays, low cost per screen (comparable to that of screens ion standardized glass slide well plates) and the flexibility in automated process.

In an example a single microscope with changeable optical configuration may be employed to carry out multi-resolution optical correlative methods described above. The microscope may be configured to operate in a wide-field mode, in which a large field of view can be visualized; confocal mode, in which a 3D imaging of the sample with confocal sectioning may be carried out; and/or super-resolution mode, in which super-resolution images of selected objects of interest are obtained. For example, the super-resolution mode may allow for super-resolution *d*STORM or SPDMphymod imaging. Other super-resolution microscopy techniques may be also used.

Alternatively, different microscopes, each of them operating in the respective image acquisition mode, may be employed for the purposes of correlative microscopy.

In a wide-field mode it is possible to rapidly obtained images of the probe within a relatively wide field of view. The obtained images may be processed in the manner described above to pre-select objects of interest within the observed sample, for example cells with interesting phenotypes. The obtained positional information of the pre-selected objects of interest may be stored in a storage unit, for example in an XML-format (or any other format which preferably allows portability between different imaging platforms and/or microscope control software). In an example, positional information may be stored in form of an XML table. The storage unit may further store one or more microscopic images obtained by the microscope.

In the confocal mode (if a confocal microscope with a high numeric objective and high magnification is employed), usually only one cell is within the field of view of the microscope. By switching to the confocal imaging mode, individual objects (for example cells) can be identified and visualized, which allows 3D imaging with confocal sectioning. However, 3D acquisition within the conventional resolution limit takes more than 30 seconds. This means about 3-4 orders of magnitude longer than low resolution wide field imaging for the same amount of cells.

In a single wide field image in the super-resolution mode, about 50 to 100 cells (depending on the cell density) can be acquired simultaneously within the same field of view as in conventional wide field fluorescent microscope and within the time frame of below one second. Acquiring the same number of cells with a confocal system as in the low resolution wide-field mode would take about 0.5 to 1 h. With a super-resolution microscopic method such as dSTORM, acquisition of one cell takes in the order of 300 s, to record 50 - 100 cells takes about 4 to 8 h.

As the confocal mode and the super-resolution mode require considerably longer times for obtaining images of the same field of view as conventional wide-field fluorescent microscope, a pre-selection of candidates for high resolution measurements based on the low resolution wide field images is necessary, in order to restrict the high resolved image acquisition to appropriate regions of interest and to decrease the time of data acquisition. Platform and/or reference object independent positional information of pre-selected objects of interest may be obtained by any of the methods described above.

Below are some specific parameters of an exemplary optical microscopes and microscopic system suitable for carrying out the methods according to an aspect of the inention.

In this example, the sample was marked with standard fluorophores, such as for example DAPI, CFP, Alexa Fluor 532 and Alexa Fluor 647 fluorophores, that are suitable for subsequent imaging in wide field, confocal and *d*STORM (Alexa 532 and Alexa 647) microscopy and can easily be used for two color colocalization studies. The sample was further marked with fluorescent microspheres with diameter of 0.1 µm. The sample was placed in a multiwell array as a sample holder.

### Wide-field mode

Wide-field images were acquired with a conventional wide-field florescent microscope (first microscope), for example Olympus IX81 microscope with a 10x objective lens and a field of view of 866 µm x 660 µm. The sample was illuminated by an illuminating unit comprising a 150W Hg/Xe mixed gas arc burner in combination with appropriate filter combinations for Alexa Fluor 532 and Alexa Fluor 647, respectively. Integration times where all set to 200 ms in order to make best use of the dynamic range of the CCD camera (comprised in the image detection unit). On these images, representative cells showing fluorescent signal (objects of interests, hits) were selected. Positional data of the representative cells were stored in form of a XML-table in a storage unit of the microscope. The positional data were stored in a reference coordinate system established as described above.

### Confocal microscopy mode

In a next step the selected cells were imaged on a confocal microscope (second microscope), such as for example Leica TCS SP5 with a scan speed of 400 Hz at 512 x 512 pixels with a pixel size of 69 nm, resulting in a field of view of 49 µm x 49 µm (pinhole diameter: 96 µm). Per cell image, 47 focal positions were acquired with a distance of 0.2 µm, the cell was roughly positioned in the center of the z-stack by an autofocus routine before acquisition. In particular, after determining a transformation from the reference coordinate system to the coordinate system of the Leica TCS SP5 microscope, the positional data of the selected cells obtained by the first microscope and received from a storage unit were transformed to the coordinate system of the Leica TCS SP5 microscope and used to automatically locate these objects in the Leica TCS SP5 microscope (ex. by moving the object stage in accordance with the determined positional data).

### Super-resolution microscopy mode

The super-resolution mode was based on STORM or *d*STORM imaging. The employed STORM or *d*STORM microscope (third microscope) including an illumination unit comprising a multi-line argon-krypton laser and a UV laser (for example 405 nm diode) as light sources. A laser beam of the multi-line argon-krypton laser is coupled into an acousto-optical tunable filter for wavelength selection and then combined with a UV laser beam from the UV laser. The combined beams are focused onto the back-focal plane of an oil-immersion total internal reflection fluorescence objective (60x, NA 1.45) in an inverted microscope arrangement. Emission light is separated from excitation light by appropriate dichroic mirrors and filters and focused onto the chip of an electron multiplying charged coupled device (EM-CCD) camera (as a part of the image detecting unit). The samples were mounted on the object stage and the sample chamber was filled with switching buffer. The exposure time was 50 ms with an electron multiplier gain of 200. Imaging intensities were 35 mW at 647 nm excitation wavelength and 65 mW at 532 nm respectively. To adjust photoswitching of Alexa Fluor 647, UV light illumination was increased gradually from zero intensity to a maximum intensity of 0.1 mW. The two channels were recorded sequentially (first Alexa Fluor 647, followed by Alexa Fluor 532), chromatic shifts were corrected by using multi-color fluorescent beads. To reconstruct a *d*STORM image, typically 7000 image frames were recorded.

The same procedure as used in the confocal mode was used to locate objects of interest and to obtain their positional data in the STORM/dSTORM microscope. In particular, after determining a transformation from the reference coordinate system to the coordinate system of the STORM/dSTORM microscope, the positional data of the selected cells were transformed to the coordinate system of the STORM/dSTORM microscope and used to automatically locate these objects in the STORM/dSTORM microscope (ex. by moving the object stage in accordance with the determined positional data).

With the above microscopic system, in a single wide field image in the super-resolution mode, about 50-100 cells (depending on the cell density) can be acquired simultaneously with a magnification of 10x and a field of view of 866 µm x 660 µm within the time frame of below one second. Acquiring the same number of cells with a confocal system as in the low resolution wide-field mode would take ∼0.5 - 1 h. With dSTORM, acquisition of one cell takes in the order of 300 s, to record 50 - 100 cells takes about 4 - 8 h.

The above microscopic system may be used for visualizing subcellular distribution of two Golgi proteins GM130 and GalT, localizing at *cis-* and *trans*-Golgi*,* respectively. The wide-field configuration can visualize the partially fragmented Golgi complex, but the mutual distribution of GM130 and GalT is poorly resolved. Confocal imaging provides information on largely polarized distribution of GM130 and GalT at Golgi ministacks. Furthermore, *d*STORM imaging can resolve GM130 and GalT specific structures not visible as distinct ones in a confocal mode, as the technique can achieve about 20 nm spatial resolution in the imaging plane. That allows collecting considerably improved information on size, numbers and shape of the Golgi ministacks.

Subsequently, a quantitative analysis of GalT and GM130 colocalization may be carried out in treated and non-treated cells. Confocal images may be analyzed for colocalization by intensity correlation analysis (ICA), whereas dSTORM images may be analyzed using coordinate-based colocalization (CBC). In general, colocalization analysis of confocal images over-estimates both the size of colocalization sites and the size of colocalizing structures themselves. For the Golgi complex with a normal appearance, colocalisation analysis based on confocal images might be even more difficult to apply, because of too high density of one or both of the proteins. dSTORM and CBC analysis overcome these problems, particularly in the compact regions of the Golgi complex. From CBC analysis, in addition information on the average size of a colocalization site may be obtained. In addition, single-molecule based super-resolution techniques offer the additional advantage of providing molecular coordinates, which can be further processed in e.g. molecular-level colocalization analysis. This is significantly different to colocalization analysis in confocal microscopy, which is based on the intensity information in individual pixels and thus is spatially constrained. In a coordinate-based approach and applied to single-molecule localization data, a colocalization value can be attributed to each single molecule.

A number of embodiments have been described. Nevertheless, it will be understood that various modifications may be made. For example, the steps described can be performed in a different order and still achieve desirable results. Accordingly, other embodiments are within the scope of the claims.

### List of Reference Numerals

- 10: microscopic image of the probe
- 11: microscopic image of a reference marking
- 12: probe positioning device or system (ex. object stage)
- 14: field of view of a microscope
- 16: first microscopic image of the probe obtained by a first microscope
- 18: second microscopic image of the probe obtained by a second microscope
- 20: scaled second image of the probe
- B: fluorescent beads
- C1-C3: probe specific cells (target objects)
- OI: object of interest
- C: center/center of gravity
- R1-R3: reference markings
- Sxx: method steps
- {*x,y,z*}: coordinate system associate with the microscope
- {*x',y',z'*}: reference coordinate system

## Claims

1. A method for obtaining multidimensional positional data of at least one object of interest within a probe by using a microscope comprising:
obtaining at least one image (10) of the probe by said microscope;
identifying at least three reference markings (R1, R2, R3) associated with said probe (10) in the at least one image and determining their positions in the at least one image (10, 11);
determining at least a three-dimensional reference coordinate system associated with said reference markings (R1, R2, R3) based on the determined positions of the reference markings in the at least one image (10, 11) and data concerning the position of a probe positioning device (12) of the microscope;
identifying one or more objects of interest (OI) within the at least one image (10, 11);
determining positional information of the one or more objects of interest (OI) in the reference coordinate system,
wherein in the step of obtaining at least one image, a plurality of images (10, 11) of the probe is obtained by moving the probe positioning device (12) to expected positions of the at least three reference markings (R1, R2, R3) and acquiring an image (11) at the expected position of each of the reference markings (R1, R2, R3), and wherein in each of the obtained images the positon of the corresponding reference marking (R1, R2, R3) is determined, and
wherein said method is **characterized in that** the reference markings (R1, R2, R3) are fluorescent beads and/or wherein the reference markings (R1, R2, R3) are specific structures or objects inherent to the observed probe (10).

2. A method for locating at least one object of interest (OI) within a probe (10) in a microscope comprising:
obtaining multidimensional positional data of at least one object of interest (OI) in at least a three dimensional reference coordinate system associated with at least three reference markings (R1, R2, R3), said reference markings (R1, R2, R3) being associated with the probe and said reference markings (R1, R2, R3) being fluorescent beads, fluorescent markers and/or wherein the reference markings (R1, R2, R3) are specific structures or objects inherent to the observed probe (10).;
obtaining at least one image (10, 11) of a probe by said microscope;
identifying said at least three reference markings (R1, R2, R3) and determining their positions in said at least one image (10, 11);
determining a coordinate transformation from the reference coordinate system to a coordinate system of the microscope based on the determined positions of said at least three reference markings (R1, R2, R3) in the at least one image (10, 11);
transferring said positions of the one or more objects of interest (01) from said reference coordinate system to the coordinate system of said microscope by applying said coordinate transformation; and
locating said objects of interest based on the determined positions of the objects of interest (Ol) in said coordinate system of the microscope,
wherein in the step of obtaining at least one image, a plurality of images (10, 11) of the probe is obtained by moving the probe positioning device (12) to expected positions of the at least three reference markings (R1, R2, R3) and acquiring an image (11) at the expected position of each of the reference markings (R1, R2, R3), and wherein in each of the obtained images the positon of the corresponding reference marking (R1, R2, R3) is determined, and
wherein said method is **characterized in that** the reference markings (R1, R2, R3) are fluorescent beads and/or wherein the reference markings (R1, R2, R3) are specific structures or objects inherent to the observed probe (10).

3. The method according to claim 1 or 2,
wherein the step of determining the position of the reference markings (R1, R2, R3) comprises determining the geometrical center or the center of gravity (C) of the obtained images (11) of the reference markings (R1, R2, R3); and/or
wherein the step of identifying of the at least three reference markings (R1, R2, R3) in said at least one (10, 11) image obtained by said microscope comprises applying object recognition, shape fitting and/or template matching algorithms to said at least one image.

4. The method according to any of the preceding claims, wherein color is used for discriminating the reference markings (R1, R2, R3) and the objects of interest (OI).

5. The method according to any of the preceding claims, wherein the positional data of the identified objects of interest (OI) in the reference coordinate system is stored in an XML-format.

6. A method for carrying out microscopic observations of a probe by using at least two microscopes comprising:
obtaining positional data of at least one object of interest (01) within a probe by a first microscope according to the method of claim 1 or claim 1 in combination with any of claims 3 to 5;
locating said objects of interest (OI) in a second microscope according to the method of claim 2 or claim 2 in combination with any of claims 3 to 5; and
obtaining microscopic images of said objects of interest (OI) by using the second microscope.

7. The method according to claim 6, wherein the first microscope has a lower resolution than the resolution of the second microscope.

8. A method for carrying out microscopic observations of a probe (10) by using at least two microscopes comprising:
acquiring at least one first image (16) of the probe by a first microscope,
identifying at least one target object (C1-C3; B) and at least one object of interest (OI) within the first image and obtaining first positional data of the at least one target object (C1-C3; B) and at least one object of interest (OI) on the basis of the first image;
locating the at least one target object (C1-C3; B) in a second microscope based on the first positional data of the at least one target object (C1-C3; B) and obtaining at least one second image (18) of the at least one target object (C1-C3; B) by the second microscope;
scaling and/or transforming the second image (18) to match the parameters of the first image;
determining the shift and/or rotation between the first image and the scaled and/or transformed second image (20);
correcting the first positional data of the at least one object of interest (OI) taking into account the determined shift and/or rotation between the first image (16) and the scaled second image (20); and
re-locating the at least one object of interest (OI) based on the corrected first positional data of the at least one object of interest (OI) and obtaining a second image of the at least one object of interest (OI) by the second microscope,
wherein
the step of obtaining first positional data of the at least one target object (C1-C3; B) and at least one object of interest (OI) on the basis of the first image (16) comprises obtaining positional data of said at least one object of interest and at least one target object (C1-C3; B) in a reference coordinate system according to the method of claim 1 or claim 1 in combination with any of claims 3 to 5; and/or
the step of locating the at least one target object (C1-C3; B) and/or at least one object of interest (01) in said second microscope comprises locating said at least one target object (C1-C3; B) and/or object of interest (OI) in the second microscope according to the method of claim 2 or claim 2 in combination with any of claims 3 to 5.

9. The method according to claim 8, wherein the parameters of the first image (16) comprise image magnification and/or image size.

10. The method according to claim 8 or 9, wherein the step of determining the shift and/or rotation between the first image (16) and the scaled and/or transformed second image (20) comprises correlating and/or target matching of the first image (16) and the scaled second image (20).

11. A computer program product comprising instructions to cause a microscope or a system using at least two microscopes and comprising a probe positioning device to carry out a method according to any of the preceding claims.

12. A microscope comprising
an illumination unit configured to illuminate a probe;
a movable probe positioning device (12);
an image detection unit configured to capture at least one image of the illuminated probe;
a reference coordinate system calculating unit configured to:
- identify at least three reference markings (R1, R2, R3) associated with said probe in at least one image (10, 11) of the probe obtained by the microscope, wherein the reference markings (R1, R2, R3) are fluorescent beads and/or wherein the reference markings (R1, R2, R3) are specific structures or objects inherent to the observed probe (10);
- determine the positions of said at least three reference markings (R2, R2, R3) in the obtained at least one image (10, 11); and
- determine at least a three-dimensional reference coordinate system associated with said reference markings (R1, R2, R3) based on the determined positions of the reference markings in the at least one image (10, 11) and data concerning the position of the probe positioning device (12) of the microscope;
a positional data calculating unit configured to obtain multidimensional positional data of at least one object of interest (OI) within the probe (10) based on the plurality of images (10, 11) of the probe obtained by the microscope and to transfer the positional data of said at least one object of interest (OI) in the reference coordinate system,
wherein the image detection unit is configured to capture a plurality of images (10, 11) of the probe by moving the probe positioning device (12) to expected positions of the at least three reference markings (R1, R2, R3) and acquiring an image (11) at the expected position of each of the reference markings (R1, R2, R3), and wherein the reference coordinate system calculating unit is configured to determine, in each of the obtained images, the positon of the corresponding reference marking (R1, R2, R3).

13. A microscope according to claim 12 further comprising:
a positional data receiving unit configured to receive positional data of at least one object of interest (OI) in at least a three-dimensional reference coordinate system associated with at least three
reference markings (R1, R2, R3) associated with said probe;
a coordinate transfer unit configured to:
identify said at least three reference markings (R1, R2, R2) in at least one image (10, 11) obtained by said optical microscope and determine the positions of said at least three reference markings (R1, R2, R2) based on the at least one image (10, 11);
determine a coordinate transformation from the reference coordinate system to a coordinate system of the microscope based on the determined positions of said at least three reference markings (R1, R2, R3) in the at least one image (10, 11); and
transfer the positions of the one or more objects of interest (OI) from said reference coordinate system to the coordinate system of said microscope by applying said coordinate transformation;
a movable probe positioning device (12) configured to move in accordance with the determined positions of the objects of interest (OI) in said coordinate system associated with the microscope so as to locate said objects of interest (01),
wherein the image detection unit is configured to capture a plurality of images (10, 11) of the probe by moving the probe positioning device (12) to expected positions of the at least three reference markings (R1, R2, R3) and acquiring an image (11) at the expected position of each of the reference markings (R1, R2, R3), and wherein the coordinate transfer unit is configured to determine, in each of the obtained images, the positon of the corresponding reference marking (R1, R2, R3).

14. A system for carrying out microscopic observations of a probe (10) by using at least two microscopes comprising:
a first image detection unit configured to obtain at least one first image (16) of an at least one object of interest (OI) and/or at least one target object (C1-C3; B) by a first microscope:
a first positional data calculating unit configured to identify at least one target object (C1-C3; B) and at least one object of interest (01) in said at least one first image and obtain first positional data of the at least one target object (C1-C3; B) and at least one object of interest (OI) on the basis of the first image (16);
a movable probe positioning device (12) configured to move in accordance with the first positional data of the at least one target object (C1-C3; B) so as to locate the at least one target object (C1-C3; B) in a second microscope;
a second image detection unit configured to obtain at least one second image (18) of an at least one object of interest (01) and/or at least one target object (C1-C3; B) by a second microscope:
an image processing unit configured to
scale the second image (18) of said at least one target object (C1-C3; B) obtained by the second image detection unit so as to match the parameters of a first image (16) of said at least one target object (C1-C3; B) obtained by the first image detection unit;
determine the shift and/or rotation between the first image (16) of the at least one target object (C1-C3; B) and the scaled second image (20) of the at least one target object (C1-C3; B);
correct the first positional data of the at least one target object (C1-C3; B) and at least one object of interest (OI) taking into account the determined shift and/or rotation between the first image (16) and the scaled second image (20); and
wherein said movable probe positioning device (12) is further configured to move in accordance with the corrected first positional data of the at least one object of interest (OI) so as locate the at least one object of interest (OI),
wherein
the first positional data calculating unit is configured to obtain first positional data of the at least one target object (C1-C3; B) and at least one object of interest (OI) in a reference coordinate system according to the method of claim 1 or claim 1 in combination with any of claims 3 to 5; and/or
the movable probe positioning device is configured to locate said at least one target object (C1-C3; B) and/or object of interest (01) in the second microscope according to the method of claim 2 or claim 2 in combination with any of claims 3 to 5.

## Patentansprüche

1. Verfahren zum Erhalten multidimensionaler Positionsdaten von zumindest einem interessierenden Objekt innerhalb einer Sonde unter Verwendung eines Mikroskops, umfassend:
Erhalten zumindest eines Bildes (10) der Sonde durch das Mikroskop;
Identifizieren von zumindest drei Referenzmarkierungen (R1, R2, R3), die der Sonde (10) zugeordnet sind, in dem zumindest einen Bild, und Bestimmen ihrer Positionen in dem zumindest einen Bild (10, 11);
Bestimmen zumindest eines dreidimensionalen Referenzkoordinatensystems, das den Referenzmarkierungen (R1, R2, R3) zugeordnet ist, basierend auf den bestimmten Positionen der Referenzmarkierungen in dem zumindest einen Bild (10, 11) und Daten bezüglich der Position einer Sondenpositionierungsvorrichtung (12) des Mikroskops;
Identifizieren eines oder mehrerer interessierender Objekte (OI) innerhalb des zumindest einen Bildes (10, 11);
Bestimmen von Positionsinformationen des einen oder der mehreren interessierenden Objekte (OI) in dem Referenzkoordinatensystem,
wobei in dem Schritt des Erhaltens zumindest eines Bildes eine Mehrzahl von Bildern (10, 11) der Sonde erhalten wird, indem die Sondenpositionierungsvorrichtung (12) zu erwarteten Positionen der zumindest drei Referenzmarkierungen (R1, R2, R3) bewegt wird und ein Bild (11) an der erwarteten Position jeder der Referenzmarkierungen (R1, R2, R3) erfasst wird, und wobei in jedem der erhaltenen Bilder die Position der entsprechenden Referenzmarkierung (R1, R2, R3) bestimmt wird , und
wobei das Verfahren **dadurch gekennzeichnet ist, dass** die Referenzmarkierungen (R1, R2, R3) fluoreszierende Kügelchen sind und/oder wobei die Referenzmarkierungen (R1, R2, R3) spezifische Strukturen oder Objekte sind, die der beobachteten Sonde (10) inhärent sind.

2. Verfahren zum Lokalisieren zumindest eines interessierenden Objekts (OI) innerhalb einer Sonde (10) in einem Mikroskop, umfassend:
Erhalten multidimensionaler Positionsdaten von zumindest einem interessierenden Objekt (OI) in zumindest einem dreidimensionalen Referenzkoordinatensystem, das zumindest drei Referenzmarkierungen (R1, R2, R3) zugeordnet ist, wobei die Referenzmarkierungen der Sonde zugeordnet sind und die Referenzmarkierungen (R1, R2, R3) fluoreszierende Kügelchen, fluoreszierende Marker sind und/oder wobei die Referenzmarkierungen (R1, R2, R3) spezifische Strukturen oder Objekte sind, die der beobachteten Sonde (10) inhärent sind;
Erhalten zumindest eines Bildes (10, 11) einer Sonde durch das Mikroskop;
Identifizieren der zumindest drei Referenzmarkierungen (R1, R2, R3) und Bestimmen ihrer Positionen in dem zumindest einen Bild (10, 11);
Bestimmen einer Koordinatentransformation von dem Referenzkoordinatensystem zu einem Koordinatensystem des Mikroskops basierend auf den bestimmten Positionen der zumindest drei Referenzmarkierungen (R1, R2, R3) in dem zumindest einen Bild (10, 11);
Übertragen der Positionen des einen oder der mehreren interessierenden Objekte (OI) von dem Referenzkoordinatensystem auf das Koordinatensystem des Mikroskops durch Anwenden der Koordinatentransformation; und
Lokalisieren der interessierenden Objekte basierend auf den bestimmten Positionen der interessierenden Objekte (OI) in dem Koordinatensystem des Mikroskops,
wobei in dem Schritt des Erhaltens zumindest eines Bildes eine Mehrzahl von Bilder (10, 11) der Sonde erhalten wird, indem die Sondenpositionierungsvorrichtung (12) zu erwarteten Positionen der zumindest drei Referenzmarkierungen (R1, R2, R3) bewegt wird und ein Bild (11) an der erwarteten Position jeder der Referenzmarkierungen (R1, R2, R3) erfasst wird, und wobei in jedem der erhaltenen Bilder die Position der entsprechenden Referenzmarkierung (R1, R2, R3) bestimmt wird, und
wobei das Verfahren **dadurch gekennzeichnet ist, dass** die Referenzmarkierungen (R1, R2, R3) fluoreszierende Kügelchen sind und/oder wobei die Referenzmarkierungen (R1, R2, R3) spezifische Strukturen oder Objekte sind, die der beobachteten Sonde (10) inhärent sind.

3. Verfahren nach Anspruch 1 oder 2,
wobei der Schritt des Bestimmens der Position der Referenzmarkierungen (R1, R2, R3) das Bestimmen des geometrischen Mittelpunkts oder des Schwerpunkts (C) der erhaltenen Bilder (11) der Referenzmarkierungen (R1, R2, R3) umfasst; und/oder
wobei der Schritt des Identifizierens der zumindest drei Referenzmarkierungen (R1, R2, R3) in dem zumindest einen Bild (10, 11), das durch das Mikroskop erhalten wird, das Anwenden von Objekterkennungs-, Formanpassungs- und/oder Schablonen- bzw. Vorlagenanpassungsalgorithmen auf das zumindest eine Bild umfasst.

4. Verfahren nach einem der vorhergehenden Ansprüche, wobei Farbe zur Unterscheidung der Referenzmarkierungen (R1, R2, R3) und der interessierenden Objekte (OI) verwendet wird.

5. Verfahren nach einem der vorhergehenden Ansprüche, wobei die Positionsdaten der identifizierten interessierenden Objekte (OI) in dem Referenzkoordinatensystem in einem XML-Format gespeichert werden.

6. Verfahren zum Durchführen von mikroskopischen Beobachtungen einer Sonde unter Verwendung von zumindest zwei Mikroskopen, umfassend:
Erhalten von Positionsdaten von zumindest einem interessierenden Objekt (OI) innerhalb einer Sonde durch ein erstes Mikroskop gemäß dem Verfahren nach Anspruch 1 oder Anspruch 1 in Kombination mit einem der Ansprüche 3 bis 5;
Lokalisieren der interessierenden Objekte (OI) in einem zweiten Mikroskop gemäß dem Verfahren nach Anspruch 2 oder Anspruch 2 in Kombination mit einem der Ansprüche 3 bis 5; und
Erhalten von mikroskopischen Bildern der interessierenden Objekte (OI) unter Verwendung des zweiten Mikroskops.

7. Verfahren nach Anspruch 6, wobei das erste Mikroskop eine niedrigere Auflösung als die Auflösung des zweiten Mikroskops aufweist.

8. Verfahren zum Durchführen von mikroskopischen Beobachtungen einer Sonde (10) unter Verwendung von zumindest zwei Mikroskopen, umfassend:
Erfassen zumindest eines ersten Bildes (16) der Sonde durch ein erstes Mikroskop,
Identifizieren von zumindest einem Zielobjekt (C1-C3; B) und zumindest einem interessierenden Objekt (OI) innerhalb des ersten Bildes und Erhalten der ersten Positionsdaten des zumindest einen Zielobjekts (C1-C3; B) und zumindest eines interessierenden Objekts (OI) auf Basis des ersten Bildes;
Lokalisieren des zumindest einen Zielobjekts (C1-C3; B) in einem zweiten Mikroskop basierend auf den ersten Positionsdaten des zumindest einen Zielobjekts (C1-C3; B) und Erhalten zumindest eines zweiten Bildes (18) des zumindest einen Zielobjekts (C1-C3; B) durch das zweite Mikroskop;
Skalieren und/oder Transformieren des zweiten Bildes (18), um mit den Parametern des ersten Bildes übereinzustimmen;
Bestimmen der Verschiebung und/oder Drehung zwischen dem ersten Bild und dem skalierten und/oder transformierten zweiten Bild (20);
Korrigieren der ersten Positionsdaten des zumindest einen interessierenden Objekts (OI) unter Berücksichtigung der bestimmten Verschiebung und/oder Drehung zwischen dem ersten Bild (16) und dem skalierten zweiten Bild (20); und
Relokalisieren des zumindest einen interessierenden Objekts (OI) basierend auf den korrigierten ersten Positionsdaten des zumindest einen interessierenden Objekts (OI) und Erhalten eines zweiten Bildes des zumindest einen interessierenden Objekts (OI) durch das zweite Mikroskop,
wobei
der Schritt des Erhaltens erster Positionsdaten des zumindest einen Zielobjekts (C1-C3; B) und zumindest eines interessierenden Objekts (OI) auf der Basis des ersten Bildes (16) das Erhalten von Positionsdaten des zumindest einen interessierenden Objekts und zumindest einen Zielobjekts (C1-C3; B) in einem Referenzkoordinatensystem gemäß dem Verfahren nach Anspruch 1 oder Anspruch 1 in Kombination mit einem der Ansprüche 3 bis 5 umfasst; und/oder
der Schritt des Lokalisierens des zumindest einen Zielobjekts (C1-C3; B) und/oder zumindest eines interessierenden Objekts (OI) in dem zweiten Mikroskop das Lokalisieren des zumindest einen Zielobjekts (C1-C3; B) und/oder interessierenden Objekts (OI) in dem zweiten Mikroskop gemäß dem Verfahren nach Anspruch 2 oder Anspruch 2 in Kombination mit einem der Ansprüche 3 bis 5 umfasst.

9. Verfahren nach Anspruch 8, wobei die Parameter des ersten Bildes (16) eine Bildvergrößerung und/oder Bildgröße umfassen.

10. Verfahren nach Anspruch 8 oder 9, wobei der Schritt des Bestimmens der Verschiebung und/oder Drehung zwischen dem ersten Bild (16) und dem skalierten und/oder transformierten zweiten Bild (20) das Korrelieren und/oder die Zielanpassung bzw. -übereinstimmung des ersten Bildes (16) und des skalierten zweiten Bildes (20) umfasst.

11. Computerprogrammprodukt, umfassend Anweisungen, um ein Mikroskop oder ein System, das zumindest zwei Mikroskope verwendet und eine Sondenpositionierungsvorrichtung umfasst, zu veranlassen, ein Verfahren nach einem der vorhergehenden Ansprüche auszuführen.

12. Mikroskop umfassend
eine Beleuchtungseinheit, die konfiguriert ist, eine Sonde zu beleuchten;
eine bewegliche Sondenpositionierungsvorrichtung (12);
eine Bilddetektionseinheit, die konfiguriert ist, zumindest ein Bild der beleuchteten Sonde aufzunehmen;
eine Referenzkoordinatensystem-Berechnungseinheit, die konfiguriert ist zum:
- Identifizieren von zumindest drei Referenzmarkierungen (R1, R2, R3), die der Sonde zugeordnet sind, in zumindest einem Bild (10, 11) der Sonde, das durch das erhalten wird, wobei die Referenzmarkierungen (R1, R2, R3) fluoreszierende Kügelchen sind und/oder wobei die Referenzmarkierungen (R1, R2, R3) spezifische Strukturen oder Objekte sind, die der beobachteten Sonde (10) inhärent sind;
- Bestimmen der Positionen der zumindest drei Referenzmarkierungen (R2, R2, R3) in dem erhaltenen zumindest einen Bild (10, 11); und
- Bestimmen von zumindest einem dreidimensionalen Referenzkoordinatensystem, das den Referenzmarkierungen (R1, R2, R3) zugeordnet ist, basierend auf den bestimmten Positionen der Referenzmarkierungen in dem zumindest einen Bild (10, 11) und Daten bezüglich der Position der Sondenpositionierungsvorrichtung (12) des Mikroskops;
eine Positionsdatenberechnungseinheit, die konfiguriert ist, multidimensionale Positionsdaten von zumindest einem interessierenden Objekt (OI) innerhalb der Sonde (10) basierend auf der Mehrzahl von Bildern (10, 11) der Sonde zu erhalten, die durch das Mikroskop erhalten werden, und die Positionsdaten des zumindest einen interessierenden Objekts (OI) in das Referenzkoordinatensystem zu übertragen,
wobei die Bilddetektionseinheit konfiguriert ist, eine Mehrzahl von Bildern (10, 11) der Sonde aufzunehmen, indem die Sondenpositionierungsvorrichtung (12) zu erwarteten Positionen der zumindest drei Referenzmarkierungen (R1, R2, R3) bewegt wird und ein Bild (11) an der erwarteten Position jeder der Referenzmarkierungen (R1, R2, R3) erfasst wird, und wobei die Referenzkoordinatensystem-Berechnungseinheit konfiguriert ist, in jedem der erhaltenen Bilder die Position der entsprechenden Referenzmarkierung (R1, R2, R3) zu bestimmen.

13. Mikroskop nach Anspruch 12, ferner umfassend:
eine Positionsdatenempfangseinheit, die konfiguriert ist, Positionsdaten von zumindest einem interessierenden Objekt (OI) in zumindest einem dreidimensionalen Referenzkoordinatensystem zu empfangen, das zumindest drei Referenzmarkierungen (R1, R2, R3) zugeordnet ist, die der Sonde zugeordnet sind;
eine Koordinatenübertragungseinheit, die konfiguriert ist zum:
Identifizieren der zumindest drei Referenzmarkierungen (R1, R2, R2) in zumindest einem Bild (10, 11), das durch das optische Mikroskop erhalten wurde, und Bestimmen der Positionen der zumindest drei Referenzmarkierungen (R1, R2, R2) basierend auf dem zumindest einen Bild (10, 11);
Bestimmen einer Koordinatentransformation von dem Referenzkoordinatensystem zu einem Koordinatensystem des Mikroskops basierend auf den bestimmten Positionen der zumindest drei Referenzmarkierungen (R1, R2, R3) in dem zumindest einen Bild (10, 11); und
Übertragen der Positionen des einen oder der mehreren interessierenden Objekte (OI) von dem Referenzkoordinatensystem auf das Koordinatensystem des Mikroskops durch Anwenden der Koordinatentransformation;
eine bewegliche Sondenpositionierungsvorrichtung (12), die konfiguriert ist, sich gemäß den bestimmten Positionen der interessierenden Objekte (OI) in dem dem Mikroskop zugeordneten Koordinatensystem zu bewegen, um die interessierenden Objekte (OI) zu lokalisieren,
wobei die Bilddetektionseinheit konfiguriert ist, eine Mehrzahl von Bildern (10, 11) der Sonde aufzunehmen, indem die Sondenpositionierungsvorrichtung (12) zu erwarteten Positionen der zumindest drei Referenzmarkierungen (R1, R2, R3) bewegt wird und ein Bild (11) an der erwarteten Position jeder der Referenzmarkierungen (R1, R2, R3) erfasst wird, und wobei die Koordinaten-übertragungseinheit konfiguriert ist, in jedem der erhaltenen Bilder die Position der entsprechenden Referenzmarkierung (R1, R2, R3) zu bestimmen.

14. System zum Durchführen von mikroskopischen Beobachtungen einer Sonde (10) unter Verwendung von zumindest zwei Mikroskopen, umfassend:
eine erste Bilddetektionseinheit, die konfiguriert ist, zumindest ein erstes Bild (16) zumindest eines interessierenden Objekts (OI) und/oder zumindest eines Zielobjekts (C1-C3; B) durch ein erstes Mikroskop zu erhalten:
eine erste Positionsdatenberechnungseinheit, die konfiguriert ist, zumindest ein Zielobjekt (C1-C3; B) und zumindest ein interessierendes Objekt (OI) in dem zumindest einen ersten Bild zu identifizieren und erste Positionsdaten des zumindest einen Zielobjekts (C1-C3; B) und zumindest eines interessierenden Objekts (OI) auf Basis des ersten Bildes (16) zu erhalten;
eine bewegliche Sondenpositionierungsvorrichtung (12), die konfiguriert ist, sich gemäß den ersten Positionsdaten des zumindest einen Zielobjekts (C1-C3; B) zu bewegen, um das zumindest eine Zielobjekt (C1-C3; B) in einem zweiten Mikroskop zu lokalisieren;
eine zweite Bilddetektionseinheit, die konfiguriert ist, zumindest ein zweites Bild (18) zumindest eines interessierenden Objekts (OI) und/oder zumindest eines Zielobjekts (C1-C3; B) durch ein zweites Mikroskop zu erhalten:
eine Bildverarbeitungseinheit, die konfiguriert ist zum
Skalieren des zweiten Bildes (18) des zumindest einen Zielobjekts (C1-C3; B), das von der zweiten Bilddetektionseinheit erhalten wird, dahingehend, dass es mit den Parametern eines ersten Bildes (16) des zumindest einen Zielobjekts (C1-C3; B) übereinstimmt, das von der ersten Bilddetektionseinheit erhalten wird;
Bestimmen der Verschiebung und/oder Drehung zwischen dem ersten Bild (16) des zumindest einen Zielobjekts (C1-C3; B) und dem skalierten zweiten Bild (20) des zumindest einen Zielobjekts (C1-C3; B);
Korrigieren der ersten Positionsdaten des zumindest einen Zielobjekts (C1-C3; B) und zumindest eines interessierenden Objekts (OI) unter Berücksichtigung der bestimmten Verschiebung und/oder Drehung zwischen dem ersten Bild (16) und dem skalierten zweiten Bild (20); und
wobei die bewegliche Sondenpositionierungsvorrichtung (12) ferner konfiguriert ist, sich gemäß den korrigierten ersten Positionsdaten des zumindest einen interessierenden Objekts (OI) zu bewegen, um das zumindest eine interessierende Objekt (OI) zu lokalisieren,
wobei
die erste Positionsdatenberechnungseinheit konfiguriert ist, erste Positionsdaten des zumindest einen Zielobjekts (C1-C3; B) und zumindest eines interessierenden Objekts (OI) in einem Referenzkoordinatensystem gemäß dem Verfahren nach Anspruch 1 oder Anspruch 1 in Kombination mit einem der Ansprüche 3 bis 5 zu erhalten; und/oder
die bewegliche Sondenpositionierungsvorrichtung konfiguriert ist, das zumindest eine Zielobjekt (C1-C3; B) und/oder das interessierende Objekt (OI) in dem zweiten Mikroskop gemäß dem Verfahren nach Anspruch 2 oder Anspruch 2 in Kombination mit einem der Ansprüche 3 bis 5 zu lokalisieren.

## Revendications

1. Procédé d'obtention de données positionnelles multidimensionnelles d'au moins un objet pertinent au sein d'une sonde en utilisant un microscope comprenant :
obtenir au moins une image (10) de la sonde par ledit microscope ;
identifier au moins trois marquages de référence (R1, R2, R3) associés à ladite sonde (10) dans l'au moins une image et déterminer leurs positions dans l'au moins une image (10, 11) ;
déterminer au moins un système de coordonnées de référence tridimensionnel associé auxdits marquages de référence (RI, R2, R3) en fonction des positions déterminées des marquages de référence dans l'au moins une image (10, 11) et
de données concernant la position d'un dispositif de positionnement de sonde (12) du microscope ;
identifier un ou plusieurs objets pertinents (OI) au sein de l'au moins une image (10, 11) ;
déterminer des informations positionnelles du ou des objets pertinents (OI) dans le système de coordonnées de référence,
dans lequel dans l'étape d'obtention d'au moins une image, une pluralité d'images (10, 11) de la sonde est obtenue en déplaçant le dispositif de positionnement de sonde (12) à des positions attendues des au moins trois marquages de référence (RI, R2, R3) et acquérant une image (11) à la position attendue de chacun des marquages de référence (R1, R2, R3), et dans lequel dans chacune des images obtenues, la position du marquage de référence correspondant (RI, R2, R3) est déterminée, et
dans lequel ledit procédé est **caractérisé en ce que** les marquages de référence (RI, R2, R3) sont des billes fluorescentes et/ou dans lequel les marquages de référence (RI, R2, R3) sont des structures ou objets spécifiques inhérents à la sonde observée (10).

2. Procédé de localisation d'au moins un objet pertinent (01) au sein d'une sonde (10) dans un microscope comprenant :
obtenir des données positionnelles multidimensionnelles d'au moins un objet pertinent (OI) dans au moins un système de coordonnées de référence tridimensionnel associé à au moins trois marquages de référence (R1, R2, R3),
lesdits marquages de référence (RI, R2, R3) étant associés à la sonde et lesdits marquages de référence (RI, R2, R3) étant des billes fluorescentes, marqueurs fluorescents et/ou dans lequel les marquages de référence (R1, R2, R3) sont des structures ou objets spécifiques inhérents à la sonde observée (10) ;
obtenir au moins une image (10, 11) d'une sonde par ledit microscope ;
identifier lesdits au moins trois marquages de référence (RI, R2, R3) et
déterminer leurs positions dans ladite au moins une image (10, 11) ;
déterminer une transformation de coordonnées du système de coordonnées de référence à un système de coordonnées du microscope en fonction des positions déterminées desdits au moins trois marquages de référence (RI, R2, R3) dans l'au moins une image (10, 11) ;
transférer lesdites positions du ou des objets pertinents (OI) dudit système de coordonnées de référence au système de coordonnées dudit microscope en appliquant ladite transformation de coordonnées ; et
localiser lesdits objets pertinents en fonction des positions déterminées des objets pertinents (OI) dans ledit système de coordonnées du microscope,
dans lequel dans l'étape d'obtention d'au moins une image, une pluralité d'images (10, 11) de la sonde est obtenue en déplaçant le dispositif de positionnement de sonde (12) à des positions attendues des au moins trois marquages de référence (RI, R2, R3) et acquérant une image (11) à la position attendue de chacun des marquages de référence (R1, R2, R3), et dans lequel dans chacune des images obtenues, la position du marquage de référence correspondant (RI, R2, R3) est déterminée, et
dans lequel ledit procédé est **caractérisé en ce que** les marquages de référence (R1, R2, R3) sont des billes fluorescentes et/ou dans lequel les marquages de référence (RI, R2, R3) sont des structures ou objets spécifiques inhérents à la sonde observée (10).

3. Procédé selon la revendication 1 ou 2,
dans lequel l'étape de détermination de la position des marquages de référence (R1, R2, R3) comprend déterminer le centre géométrique ou le centre de gravité (C) des images obtenues (11) des marquages de référence (R1, R2, R3) ; et/ou dans lequel l'étape d'identification des au moins trois marquages de référence (R1, R2, R3) dans ladite au moins une image (10, 11) obtenue par ledit microscope comprend appliquer des algorithmes de reconnaissance d'objet, d'ajustement de forme et/ou de concordance matricielle à ladite au moins une image.

4. Procédé selon l'une quelconque des revendications précédentes, dans lequel de la couleur est utilisée pour distinguer les marquages de référence (RI, R2, R3) et les objets pertinents (OI).

5. Procédé selon l'une quelconque des revendications précédentes, dans lequel les données positionnelles des objets pertinents identifiés (OI) dans le système de coordonnées de référence sont stockées dans un format XML.

6. Procédé de réalisation d'observations microscopiques d'une sonde en utilisant au moins deux microscopes comprenant :
obtenir des données positionnelles d'au moins un objet pertinent (OI) au sein d'une sonde par un premier microscope conformément au procédé selon la revendication 1 ou la revendication 1 en combinaison avec l'une quelconque des revendications 3 à 5 ;
localiser lesdits objets pertinents (OI) dans un second microscope conformément au procédé selon la revendication 2 ou la revendication 2 en combinaison avec l'une quelconque des revendications 3 à 5 ; et
obtenir des images microscopiques desdits objets pertinents (01) en utilisant le second microscope.

7. Procédé selon la revendication 6, dans lequel le premier microscope a une résolution inférieure à la résolution du second microscope.

8. Procédé de réalisation d'observations microscopiques d'une sonde (10) en utilisant au moins deux microscopes comprenant :
acquérir au moins une première image (16) de la sonde par un premier microscope,
identifier au moins un objet cible (C1 à C3 ; B) et au moins un objet pertinent (OI) au sein de la première image et obtenir des premières données positionnelles des au moins un objet cible (C1 à C3 ; B) et au moins un objet pertinent (OI) en fonction de la première image ;
localiser l'au moins un objet cible (C1 à C3 ; B) dans un second microscope en fonction des premières données positionnelles de l'au moins un objet cible (C1 à C3 ; B) et obtenir au moins une seconde image (18) de l'au moins un objet cible (C1 à C3 ; B) par le second microscope ;
réduire et/ou transformer la seconde image (18) pour correspondre aux paramètres de la première image ;
déterminer le décalage et/ou la rotation entre la première image et la seconde image réduite et/ou transformée (20) ;
corriger les premières données positionnelles de l'au moins un objet pertinent (OI) en tenant compte du décalage et/ou de la rotation déterminé(e) entre la première image (16) et la seconde image réduite (20) ; et
relocaliser l'au moins un objet pertinent (OI) en fonction des premières données positionnelles corrigées de l'au moins un objet pertinent (OI) et obtenir une seconde image de l'au moins un objet pertinent (OI) par le second microscope, dans lequel
l'étape d'obtention des premières données positionnelles des au moins un objet cible (C1 à C3 ; B) et au moins un objet pertinent (OI) en fonction de la première image (16) comprend obtenir des données positionnelles desdits au moins un objet pertinent et au moins un objet cible (C1 à C3 ; B) dans un système de coordonnées de référence conformément au procédé selon la revendication 1 ou la revendication 1 en combinaison avec l'une quelconque des revendications 3 à 5 ; et/ou
l'étape de localisation de l'au moins un objet cible (C1 à C3 ; B) et/ou l'au moins un objet pertinent (OI) dans ledit second microscope comprend localiser lesdits au moins un objet cible (C1 à C3 ; B) et/ou objet pertinent (OI) dans le second microscope conformément au procédé selon la revendication 2 ou la revendication 2 en combinaison avec l'une quelconque des revendications 3 à 5.

9. Procédé selon la revendication 8, dans lequel les paramètres de la première image (16) comprennent le grossissement d'image et/ou la taille d'image.

10. Procédé selon la revendication 8 ou 9, dans lequel l'étape de détermination du décalage et/ou de la rotation entre la première image (16) et la seconde image réduite et/ou transformée (20) comprend mettre en corrélation et/ou réaliser une concordance de cibles de la première image (16) et la seconde image réduite (20).

11. Produit de programme informatique comprenant des instructions pour amener un microscope ou un système utilisant au moins deux microscopes et comprenant un dispositif de positionnement de sonde à réaliser un procédé selon l'une quelconque des revendications précédentes.

12. Microscope comprenant
un module d'éclairement configuré pour éclairer une sonde ;
un dispositif de positionnement de sonde mobile (12) ;
un module de détection d'image configuré pour capturer au moins une image de la sonde éclairée ;
un module de calcul de système de coordonnées de référence configuré pour :
- identifier au moins trois marquages de référence (RI, R2, R3) associés à ladite sonde dans au moins une image (10, 11) de la sonde obtenue par le microscope, dans lequel les marquages de référence (R1, R2, R3) sont des billes fluorescentes et/ou dans lequel les marquages de référence (RI, R2, R3) sont des structures ou objets spécifiques inhérents à la sonde observée (10) ;
- déterminer les positions desdits au moins trois marquages de référence (RI, R2, R3) dans l'au moins une image obtenue (10, 11) ; et
- déterminer au moins un système de coordonnées de référence tridimensionnel associé auxdits marquages de référence (R1, R2, R3) en fonction des positions déterminées des marquages de référence dans l'au moins une image (10, 11) et de données concernant la position du dispositif de positionnement de sonde (12) du microscope ;
un module de calcul de données positionnelles configuré pour obtenir des données positionnelles multidimensionnelles d'au moins un objet pertinent (OI) au sein de la sonde (10) en fonction de la pluralité d'images (10, 11) de la sonde obtenues par le microscope et pour transférer les données positionnelles dudit au moins un objet pertinent (OI) dans le système de coordonnées de référence, dans lequel le module de détection d'image est configuré pour capturer une pluralité d'images (10, 11) de la sonde en déplaçant le dispositif de positionnement de sonde (12) à des positions attendues des au moins trois marquages de référence (RI, R2, R3) et acquérant une image (11) à la position attendue de chacun des marquages de référence (R1, R2, R3), et dans lequel le module de calcul de système de coordonnées de référence est configuré pour déterminer, dans chacune des images obtenues, la position du marquage de référence correspondant (RI, R2, R3).

13. Microscope selon la revendication 12, comprenant en outre :
un module de réception de données positionnelles configuré pour recevoir des données positionnelles d'au moins un objet pertinent (OI) dans au moins un système de coordonnées de référence tridimensionnel associé à au moins trois marquages de référence (RI, R2, R3) associés à ladite sonde ;
un module de transfert de coordonnées configuré pour :
identifier lesdits au moins trois marquages de référence (RI, R2, R3) dans au moins une image (10, 11) obtenue par ledit microscope optique et déterminer les positions desdits au moins trois marquages de référence (R1, R2, R3) en fonction de l'au moins une image (10, 11) ;
déterminer une transformation de coordonnées du système de coordonnées de référence à un système de coordonnées du microscope en fonction des positions déterminées desdits au moins trois marquages de référence (R1, R2, R3) dans l' au moins une image (10, 11) ; et
transférer les positions du ou des objets pertinents (OI) dudit système de coordonnées de référence au système de coordonnées dudit microscope en appliquant ladite transformation de coordonnées ;
un dispositif de positionnement de sonde mobile (12) configuré pour se déplacer conformément aux positions déterminées des objets pertinents (OI) dans ledit système de coordonnées associé au microscope de manière à localiser lesdits objets pertinents (OI),
dans lequel le module de détection d'image est configuré pour capturer une pluralité d'images (10, 11) de la sonde en déplaçant le dispositif de positionnement de sonde (12) à des positions attendues des au moins trois marquages de référence (R1, R2, R3) et acquérant une image (11) à la position attendue de chacun des marquages de référence (RI, R2, R3), et dans lequel le module de transfert de coordonnées est configuré pour déterminer, dans chacune des images obtenues, la position du marquage de référence correspondant (RI, R2, R3).

14. Système de réalisation d'observations microscopiques d'une sonde (10) en utilisant au moins deux microscopes comprenant :
un premier module de détection d'image configuré pour obtenir au moins une première image (16) d'au moins un objet pertinent (OI) et/ou d'au moins un objet cible (C1 à C3 ; B) par un premier microscope :
un module de calcul de premières données positionnelles configuré pour identifier au moins un objet cible (C1 à C3 ; B) et au moins un objet pertinent (OI) dans ladite au moins une première image et obtenir des premières données positionnelles des au moins un objet cible (C1 à C3 ; B) et au moins un objet pertinent (OI) en fonction de la première image (16) ;
un dispositif de positionnement de sonde mobile (12) configuré pour se déplacer conformément aux premières données positionnelles de l'au moins un objet cible (C1 à C3 ; B) de manière à localiser l'au moins un objet cible (C1 à C3 ; B) dans un second microscope ;
un second module de détection d'image configuré pour obtenir au moins une seconde image (18) d'au moins un objet pertinent (OI) et/ou d'au moins un objet cible (C1 à C3 ; B) par un second microscope :
un module de traitement d'image configuré pour
réduire la seconde image (18) dudit au moins un objet cible (C1 à C3 ; B) obtenue par le second module de détection d'image de manière à correspondre aux paramètres d'une première image (16) dudit au moins un objet cible (C1 à C3 ; B) obtenue par le premier module de détection d'image ;
déterminer le décalage et/ou la rotation entre la première image (16) de l'au moins un objet cible (C1 à C3 ; B) et la seconde image réduite (20) de l'au moins un objet cible (C1 à C3 ; B) ;
corriger les premières données positionnelles des au moins un objet cible (C1 à C3 ; B) et au moins un objet pertinent (OI) en tenant compte du décalage et/ou de la rotation déterminé(e) entre la première image (16) et la seconde image réduite (20) ; et
dans lequel ledit dispositif de positionnement de sonde mobile (12) est en outre configuré pour se déplacer conformément aux premières données positionnelles corrigées de l'au moins un objet pertinent (OI) de manière à localiser l'au moins un objet pertinent (OI),
dans lequel
le module de calcul de premières données positionnelles est configuré pour obtenir des premières données positionnelles des au moins un objet cible (C1 à C3 ; B) et au moins un objet pertinent (OI) dans un système de coordonnées de référence conformément au procédé selon la revendication 1 ou la revendication 1 en combinaison avec l'une quelconque des revendications 3 à 5 ; et/ou le dispositif de positionnement de sonde mobile est configuré pour localiser lesdits au moins un objet cible (C1 à C3 ; B) et/ou objet pertinent (OI) dans le second microscope conformément au procédé selon la revendication 2 ou la revendication 2 en combinaison avec l'une quelconque des revendications 3 à 5.
